# EUROPÄISCHE PATENTSCHRIFT

(11) **EP 2 867 754 B1**
(45) Veröffentlichungstag und Bekanntmachung des Hinweises auf die Patenterteilung: **04.04.2018**
(21) Anmeldenummer: 13734009.7
(22) Anmeldetag: 26.06.2013
(51) Int. Cl.: G06F 3/044, G06F 3/047

(54) **MEHRSCHICHTKÖRPER**
MULTILAYER BODY
ÉLÉMENT MULTICOUCHES

(30) Priorität: 28.06.2012 DE 102012105713; 11.12.2012 DE 102012112112
(43) Veröffentlichungstag der Anmeldung: 06.05.2015
(73) Patentinhaber: PolyIC GmbH & Co. KG, 90763 Fürth (DE)
(72) Erfinder: ULLMANN, Andreas, 90513 Zirndorf (DE); FIX, Walter, 90763 Fürth (DE); KRUMM, Jürgen, 91056 Erlangen (DE); WALTER, Manfred, 90419 Nürnberg (DE); WELKER, Merlin, 73457 Essingen (DE); MAUL, Mathias, 90559 Burgthann (DE); MENGER, Tobias, 91058 Erlangen (DE)
(74) Vertreter: Louis Pöhlau Lohrentz
(86) Internationale Anmeldenummer: PCT/EP2013/063424
(87) Internationale Veröffentlichungsnummer: WO 2014/001405

(56) Entgegenhaltungen:
- EP-A1- 2 440 990
- EP-A1- 2 463 759
- WO-A1-2011/093420
- WO-A1-2012/111819
- DE-A1-102010 043 055
- DE-U1-202012 101 734
- US-A1- 2009 219 258

## Beschreibung

Die Erfindung betrifft einen Mehrschichtkörper mit einer Trägerschicht und zumindest einer auf der Trägerschicht angeordneten Leitungsschicht, wobei die Leitungsschicht vorliegend elektrisch leitfähige Bahnen ("Leiterbahnen") aufweisen soll. Ein solcher Mehrschichtkörper kann insbesondere zur Bereitstellung einer Tastfeldfunktionalität eingesetzt werden. Er kann auch als Heizeinrichtung genutzt werden.

Bei einem Tastfeld umfasst ein gesamter Feldbereich eine Mehrzahl von Teilbereichen, nämlich einzelnen Flächenbereichen, in denen jeweils eine Messeinrichtung vorgesehen ist, um ein Berühren oder zumindest Sichannähern eines Tastgegenstandes wie beispielsweise eines Fingers zu erfassen. Insbesondere bei einer kapazitiv arbeitenden Tastfeldvorrichtung werden die einzelnen Tastfelder durch zwei zusammenwirkende Flächenbereiche gebildet. Damit sie kapazitiv oder über ein elektromagnetisches Wechselfeld zusammenwirken können, müssen diese Flächenbereiche galvanisch voneinander getrennt sein. Die Leiterbahnen (also die elektrisch leitfähigen Elemente) des einen Flächenbereichs wirken auskoppelnd, entweder kapazitiv oder über ein elektromagnetisches Feld, und die entsprechenden Leiterbahnen des anderen Flächenbereichs wirken einkoppelnd, und somit kann von dem einen Flächenbereich in den anderen Flächenbereich eine Kopplung erfolgen. Insbesondere wirkt der eine Flächenbereich als Sendebereich, d. h. ist zum Einsatz als ein ein elektromagnetisches Feld aussendender Bereich vorgesehen, und der andere Flächenbereich wirkt dann als Empfangsbereich, empfängt also das elektromagnetische Feld.

Es hat sich für Tastfelder bewährt, wenn die Leiterbahnen eine (insbesondere gleichmäßige) Breite aus dem Intervall von 1 µm und bis 300 µm aufweisen, bevorzugt aus dem Intervall von 5 µm bis 50 µm, ganz besonders bevorzugt aus dem Intervall von 5 µm bis 25 µm aufweisen. Solche Leiterbahnen sind dann für das menschliche Auge ohne Hilfsmittel nicht auflösbar und vermindern lediglich geringfügig die Transparenz des Mehrschichtkörpers (etwa bei stark transparenter Trägerschicht), gegebenenfalls können sie auch leicht reflektieren (z. B. wenn sie aus einem stark reflektierenden Metall wie etwa Silber und dergleichen ausgebildet sind). Bevorzugt hat der Mehrschichtkörper eine Transparenz von mindestens 50 %, bevorzugt von mindestens 80 %, besonders bevorzugt von mindestens 90 % und ganz besonders bevorzugt von mindestens 95 %.

Die Verminderung der Transparenz oder leichte reflektierende Eigenschaft fällt jedoch üblicherweise wenig auf. Das ist insbesondere dann der Fall, wenn die Leiterbahnen in einer Anordnung bereitgestellt sind, in welcher sie jeweils eine oder mehrere andere Leiterbahnen berühren, sodass die Anordnung ein regelmäßiges Muster aufweist; oder alternativ, wenn die Anordnung durch eine, insbesondere stochastische, Variation eines zu einem regelmäßigen Muster definierten Parameters (wie etwa Abstand oder Winkel) aus einem regelmäßigen Muster hervorgeht.

Die Anordnung kann insbesondere ein Leiterbahngitter bilden, das durch eine ausreichend hohe Anzahl an Kreuzungspunkten eine homogene flächige Leitfähigkeit trotz geringer Belegung mit leitfähigem Material gewährleistet.

Aus der DE 102010043055 A1 ist ein Touchscreen bekannt, der ein Mehrschichtkörper ist und eine Lage mit geschlängelten Leitungen umfasst, die Trennabschnitte aufweisen, um Moire effekte zu vermeiden.

Aus der EP 2440990 A1 ist eine leitfähige Schicht zur Verwendung in einem Touchscreen bekannt, wobei die leitfähige Schicht zwei oder mehr leitfähige Gitter und eine galvanische Verbindung zweier benachbarter Gitter umfasst.

Ein Problem in der Bereitstellung der galvanischen Trennung zwischen unterschiedlichen derart durch Bereitstellung eines Musters von Leiterbahnen definierte Bereiche besteht darin, dass in der zumindest einen Leitungsschicht und damit in dem Mehrschichtkörper in einzelnen Flächenbereichen Aussparungen vorgesehen werden müssen. Gerade bei einer kapazitiven Kopplung zwischen einzelnen Arten von Tastfeldbereichen muss die Lücke relativ groß sein. Man kann sich hier damit behelfen, auch die Lücke durch Leiterbahnen in demselben Muster auszufüllen; aber auch dann werden für einen Betrachter die für die galvanische Entkopplung notwendigen Trennungsstellen als solches sichtbar.

Dieselbe Problematik besteht auch bei Heizelementen mit oder aus einem Mehrschichtkörper mit den genannten Eigenschaften: Auch dort kann es erwünscht sein, dass die eigentlichen elektrischen Leitungen nicht sichtbar sind und in Form von Leiterbahnen mit den oben genannten Abmessungen ihrer Breite vorgesehen sind. Auch bei solchen für Heizelemente genutzten Leiterbahnmustern muss es notwendigerweise eine galvanische Trennung von unterschiedlichen Bereichen geben, die aber für den Betrachter nicht sichtbar sein soll.

Es ist daher die Aufgabe der vorliegenden Erfindung, einen Mehrschichtkörper mit einer Trägerschicht und auf der Trägerschicht zumindest einer Leitungsschicht mit elektrisch leitfähigen Leiterbahnen bereitzustellen, der über mehrere, galvanisch voneinander getrennte Bereiche hinweg eine derart gleichmäßige Transparenz aufweist und/oder derart gleichmäßig reflektiert, dass die galvanischen Trennungsstellen den optischen Eindruck möglichst wenig beeinträchtigen, insbesondere dass ein menschlicher Betrachter den Mehrschichtkörper als im Wesentlichen homogen ausgebildet ansieht, obwohl die galvanischen Trennungsstellen vorhanden sind.

Diese Aufgabe wird durch einen Mehrschichtkörper mit einer Trägerschicht und auf der Trägerschicht zumindest einer Leitungsschicht mit elektrisch leitfähigen Leiterbahnen gelöst, wobei der Mehrschichtkörper einen ersten Bereich und einen zweiten Bereich aufweist, wobei sowohl in dem ersten Bereich als auch in dem zweiten Bereich jeweils Leiterbahnen dadurch galvanisch miteinander gekoppelt sind, dass sie in einer Anordnung bereitgestellt sind, in welcher die Leiterbahnen jeweils eine oder mehrere andere Leiterbahnen berühren, und wobei der erste und der zweite Bereich durch einen dritten Bereich voneinander galvanisch getrennt sind, und wobei in dem dritten Bereich die Leiterbahnen fortgeführt (also ebenfalls vorhanden) sind, wobei aber aus den Leiterbahnen derart Abschnitte ausgespart sind, dass Trennungsstellen gebildet sind, und wobei die ausgesparten Abschnitte durch an oder neben den Trennungsstellen angeordnete, insbesondere leitfähige Ersatzstücke ersetzt sind, welche so angeordnet sind, dass eine durch das Aussparen bewirkte galvanische Trennung des ersten und des zweiten Bereichs aufrecht erhalten bleibt und dass die Ersatzstücke so nahe an den Trennungsstellen angeordnet sind, dass eine mittlere Belegung der Trägerschicht mit elektrisch leitfähigem Material, die jeweils zu Flächeneinheiten mit einer Abmessung von zwischen 20 und 80 µm in einer Erstreckungsrichtung ermittelt wird, über die ersten, dritten und zweiten Bereiche hinweg nicht mehr als um 15 %, bevorzugt nicht mehr als um 10 % schwankt, besonders bevorzugt nicht mehr als um 5 % schwankt.

Durch das Bereitstellen der Ersatzstücke fällt somit nicht einfach Material für eine Leiterbahn jeweils im Bereich eines ausgesparten Abschnittes weg. Wegen des Vorhandenseins der Ersatzstücke ist es möglich, die Folgen des Wegfalls der ausgesparten Abschnitte zumindest teilweise auszugleichen, um den optischen Eindruck, den der Mehrschichtkörper auf einen Betrachter macht, im Sinne einer Vergleichmäßigung der Wirkung (hinsichtlich Transparenz bzw. Transmission und/oder hinsichtlich der reflektierenden Eigenschaft) zu verbessern.

Bevorzugt sind die Leiterbahnen in dem ersten und dem zweiten Bereich derart angeordnet, dass die Anordnung ein Muster aufweist. Dieses Muster kann insbesondere ein regelmäßiges Muster sein. Alternativ kann es durch eine (beispielsweise stochastische) Variation eines zu einem solchen regelmäßigen Muster definierten Parameters aus diesem regelmäßigen Muster hervorgehen. Aufgrund einer geeigneten Ausgestaltung eines solchen Musters kann für eine gleichmäßige mittlere Belegung des Mehrschichtkörpers mit Leiterbahnen gesorgt werden, sodass der visuelle Eindruck homogen ist. Die mittlere Belegung kann insbesondere über Flächeneinheiten definiert sein, die in einer Erstreckungsrichtung zwischen 10 und 300 µm, bevorzugt zwischen 20 und 80 µm lang sind.

Die Idee des Vorsehens einer stochastischen Variation eines zu einem solchen regelmäßigen Muster definierten Parameters bildet einen anderen, unabhängigen Aspekt der vorliegenden Anmeldung, der sich zwar vorliegend in abhängigen Ansprüchen niederschlägt, genauso gut aber auch Gegenstand von unabhängigen Ansprüchen sein könnte.

### Hierbei gilt:

Ein Leiterbahngitter zeichnet sich beispielsweise dadurch aus, dass es Gitterpunkte und dazwischen "Gittermaschen", also Gitter-Einheitszellen oder Gitterzellen, aufweist. Diese Gitterzellen haben im zweidimensionalen Gitter zwei Kantenlängen: eine entlang der x-Achse und eine entlang der y-Achse. Die Kantenlängen der Gitterzellen können in der gleichen Größenordnung sein, das ergibt beispielsweise ein Gitter, das durch aneinandergereihte Quadrate darstellbar ist. Die Kantenlängen können aber auch stark voneinander abweichen, so dass sich aneinandergereihte Spalte in der zweidimensionalen Darstellung ergeben.

Die elektrisch leitenden Flächenbereiche und/oder die Leiterbahnen innerhalb der elektrisch leitenden Flächenbereiche bilden zum Aufbau eines Tastfeldes, beispielsweise innerhalb eines Mehrschichtkörpers zur Bereitstellung einer Tastfeldfunktionalität, ein Gitter. In diesem Gitter sind die Flächenbereiche und die Leiterbahnen beispielsweise so angeordnet, dass Tastfelder und Verbindungen abgegrenzt sind. Beispielsweise dienen Tastfelder einer ersten Klasse als auskoppelnde, z.B. ein elektromagnetisches Feld abstrahlende Tastfelder und Tastfelder einer zweiten Klasse, z.B. ein elektromagnetisches Feld empfangende Tastfelder sind von diesen Tastfeldern einer ersten Klasse galvanisch getrennt. Für beide Klassen ist jeweils eine Mehrzahl von Tastfeldern der jeweiligen Klasse über Verbindungen (also Leiterbahnen) galvanisch gekoppelt.

Die Trennung der elektrisch leitenden Flächenbereiche findet über eine galvanische trennende Beabstandung der Flächenbereiche statt, so dass sich optisch ein Spalt zwischen zwei benachbarten Flächenbereichen, die mit Leiterbahnen belegt sind, ergibt. Bei der Anordnung dieser Flächenbereiche, durch Spalte getrennt, entsteht ein Gitter, bei dem die Gittermaschen oder Gitterzellen "gefüllt", also mit Leiterbahnen belegte Flächenbereiche sind und das Gitter selbst durch die Leerräume zwischen den gefüllten Gitterzellen durch elektrisch isolierende und - da auf einem transparenten Träger befindliche - transparente Spalte gebildet wird.

Nachteilig an den Gittern ist, dass regelmäßige Gitter bei Anordnung der mit Gitter belegten, an sich transparenten Schicht, mit beispielsweise einer Anzeigeeinrichtung zu einem Mehrschichtkörper, Überstrukturen ausgebildet werden können, die die Transparenz des Mehrschichtkörpers vermindern und stören. Besonders bekannt sind die so genannten Moire-Beugungseffekte, die hier durch Stapelung zumindest einer, an sich transparenten, Schicht zu einem Mehrschichtkörper zum Vorschein kommen.

So besteht immer der Bedarf, die Leiterbahngitter auf den transparenten Substraten dahingehend zu verbessern, dass bei Ausbildung eines Mehrschichtkörpers durch Stapelung zumindest einer mit Gitter belegten Schicht die Entstehung eines Moire-Beugungseffektes weiter unterdrückt wird.

Entsprechend ist es die Aufgabe zu dem weiteren, hier nicht gesondert beanspruchten Aspekt, einen Mehrschichtkörper mit zumindest einer transparenten, aber mit Leiterbahnen ganz oder teilweise belegten Schicht zur Verfügung zu stellen, die die Entstehung von sichtbaren Überstrukturen der Gitter bei Stapelung zum Mehrschichtkörper unterdrückt.

Lösung dieser anderen Aufgabe ist ein Mehrschichtkörper, der zumindest eine transparente, aber mit Bahnen ganz oder teilweise belegte Schicht umfasst, wobei zumindest ein Gitter aus nicht-transparenten und trotzdem für das menschliche Auge nicht auflösbaren Bahnen und/oder aus transparenten Spalten zwischen, mit Belegung durch Bahnen gefüllten, Gitterzellen angeordnet ist und zumindest ein Teil der das Gitter bildenden Gitterpunkte und/oder zumindest ein Teil der Kanten der Gitterzellen zufällig oder pseudo-zufällig innerhalb vorgegebener Grenzen, gesetzt und/oder in Länge und/oder Winkel zueinander variiert sind.

Die vorgegebenen Grenzen werden dabei beispielsweise durch die Gitterkonstanten eines zugrunde liegenden ursprünglich periodischen Gitters vorgegeben. So kann vorgesehen sein, dass die Verschiebung eines Gitterpunktes innerhalb eines Gitters mit einer Kantenlänge der periodischen Gitterzelle, also der zugrunde liegenden Einheitszelle, von a oder b, innerhalb der Grenze von -a/2 und +a/2 oder +b/2 und - b/2 auf der Achse, die diese Gitterkante umfasst, erfolgt. Diese Grenze beispielsweise stellt sicher, dass kein Gitterpunkt über die Lage des im ursprünglichen Gitter nächstliegenden Gitterpunktes hinaus verschoben wird. Damit können beispielsweise auch Auswirkungen auf die Leitfähigkeit des Flächenbereichs im Wesentlichen vermieden oder verringert werden.

Ein weiterer Bereich, innerhalb dessen die Gitterpunkte gemäß dem weiteren Aspekt beispielsweise zufällig oder pseudozufällig verschoben werden, wird durch die Grenzen + a/3 und - a/3 oder beispielsweise die Grenzen + b/4 bis - b/5, jeweils immer die Werte entlang der Achse, auf der auch die durch das Symbol benannte Gitterzellenkante liegt, angegeben. Dabei stellt der ursprüngliche Gitterpunkt beispielsweise den Nullpunkt dar.

Bei der Verwendung des Mehrschichtkörpers in einer Bedieneinrichtung mit Anzeigeeinrichtung, wie z.B. einem Touchscreen sind Touch-Sensorfelder vorgesehen, die Sende- und Empfangsfelder haben. Die Sende- und Empfangsfelder sind durch einen Spalt galvanisch voneinander getrennt.

Die Spalte bilden ein Gitter, das beispielsweise die Sende- und Empfangsfelder als Gitterzellen definiert. Das Gitter ist bevorzugt nicht- oder teil-periodisch aufgebaut, kann sich jedoch von einem periodischen Gitter ableiten lassen.

Im Gegensatz zu einem Gitter aus nicht-transparenten Bahnen sind die Gitterpunkte eines Gitters aus transparenten, weil freiliegenden und - beispielsweise - galvanisch zur Trennung vorgesehenen, Spalten nicht explizit sichtbar, sondern entstehen in der virtuellen Verlängerung der nicht transparenten Bahnen, die die Belegung oder das Ausgefüllte der Gitterzellen sind.

Eine Gitterzelle aus mit Leiterbahnen belegten Feldern kann beliebig in der Form variieren, beispielsweise können auch mäanderhafte und/oder interdigitale Strukturen der Spalte die Gitterzellen begrenzen.

Vorteilhafterweise ist die vorgegebene Grenze, innerhalb derer die Verschiebung eines Gitterpunktes auf einer Raumachse variiert werden kann, die Länge oder Breite der Gitterzelle. Ebenso ist vorteilhafterweise die vorgegebene Grenze, innerhalb derer die Verschiebung eines Gitterpunktes in einer Ebene variiert werden kann, die Fläche der Gitterzelle.

Nach einer vorteilhaften Ausführungsform zu diesem weiteren Aspekt ist die Belegung des transparenten Trägers mit einem Gitter aus nichttransparenten Bahnen, Gitterpunkten und/oder Gitterzellen homogen, insbesondere innerhalb eines leitfähigen Bereiches homogen, damit eine zuverlässig konstante Flächenleitfähigkeit sichergestellt ist. Dazu kann eine mittlere Belegungsdichte, die vorgegeben wird, dienen. Sie kann sich auf verschieden große Gitter-Flächenbereiche beziehen, beispielsweise kann sie sich auf einen elektrisch leitenden Flächenbereich, oder sich auch auf ein Tastfeld beziehen, das mehrere dieser Flächenbereiche, die elektrisch leitend sind und zusammenwirken, umfasst.

Vorteilhafterweise ist die Grenze, innerhalb derer die Verschiebung des Spaltes in die Raumrichtung zu dem Sende- und Empfangsbereich stattfindet, der Abstand, der die galvanische Trennung des Sende- und Empfangsbereichs gewährleistet.

Die Grenze, innerhalb derer die Verschiebung des Spaltes in die Raumrichtung entlang des Spaltes stattfindet, ist hingegen durch die Kantenlänge der entsprechenden Gitterzelle festgelegt.

Statistisch und/oder zufällig gewählt heißt vorliegend, dass sich keine Periodizität und auch keine Vorzugsrichtung innerhalb der Muster die das Gitter bildet, insbesondere der Gitterzellen und/oder Gitterpunkte ableiten lässt, sondern statistisch werden alle Punkte der Schicht mit einer Wahrscheinlichkeit, die beispielsweise durch eine vorgegebene Verteilung festgelegt ist, durch leitfähige nicht transparente Bahnen und/oder transparente Spalte belegt.

Homogene Belegung des transparenten Trägers mit nicht transparenten Bahnen und/oder transparenten Spalten heißt im Sinne des hier besprochenen weiteren Aspekts, dass die flächige Belegung des transparenten Trägers damit maximal in einem Bereich von +/- 20%, bevorzugt im Bereich von +/- 15% und insbesondere bevorzugt in einem Bereich kleiner 5% schwankt, also der Flächenbereich, der am geringsten mit Bahnen oder Spalten belegt ist gegenüber dem Bereich, der am dichtesten mit Bahnen oder Spalten belegt ist, maximal 40% weniger Belegung aufweist.

Unter "Belegung" des transparenten Substrats wird dabei verstanden, dass das Substrat durch nicht-transparente Bahnen oder transparente Spalte zwischen "gefüllten" Gittermaschen zweidimensional überdeckt ist.

Eine gut homogene Flächenbelegung ist insbesondere dann vorteilhaft, wenn eine homogene Flächenleitfähigkeit erzielt werden soll.

Eine homogene Flächenleitfähigkeit kann andererseits auch durch eine zusätzliche Anzahl z an Gitterpunkten innerhalb eines vorgegebenen Flächenbereichs erreicht werden. Beispielsweise handelt es sich bei den zusätzlichen Gitterpunkten z nicht um echte Kreuzungspunkte zweier Leiterbahnen oder zweier transparenter Spalte, sondern um einen Gitterpunkt, der einfach zwei Enden der gleichen Leiterbahn und/oder der gleichen transparenten Spalte, abseits einer direkten Linie verknüpft.

Nach einer vorteilhaften Ausführungsform zu dem weiteren Aspekt ist die Belegung des transparenten Trägers mit Gitterpunkten homogen, so dass die Leitfähigkeit über die Fläche hinweg homogen ist.

Nach einer vorteilhaften Ausführungsform zu dem weiteren Aspekt verschieben sich bei flächiger Belegung des transparenten Trägers mit dem Gitter die Gitterpunkte um einen Wert zwischen 0 und +/-a entlang der x-Achse und um einen Wert zwischen 0 und +/-b entlang der y-Achse, vorausgesetzt, die x- und y-Achse spannen die Fläche auf. Die Werte von a und b richten sich nach der Länge der Einheitszelle des Gitters, mit der Maßgabe, dass zur Erzielung von beispielsweise viereckigen Einheitszellen, der Wert von a/2 und b/2 kleiner als die Kantenlänge entlang der x- bzw. y-Achse ist.

Die Wahrscheinlichkeit oder die Häufigkeit, mit der ein Gitterpunkt um einen bestimmten Wert zwischen +a und -a auf der x-Achse verschoben wird, richtet sich dabei beispielsweise nach der Gauß-Verteilung, der so genannten Normalverteilung. Alternativ zu der Normalverteilung kann auch die Gleichverteilung oder Dreiecksverteilung gewählt werden, umso mehr, da die Tatsache, dass ein Wert einer Verschiebung in einer bestimmten Häufigkeit auftritt, nicht einer statistischen Verteilung seines Auftretens widerspricht.

Auch die zweidimensionalen Erweiterungen der Verteilungen, also beispielsweise die 2D-Gaußverteilung für beide Raumrichtungen oder andere 2D Verteilungen können die Wahrscheinlichkeit oder Häufigkeit, mit der ein Gitterpunkt eine bestimmte Verschiebung innerhalb einer vorgegebenen Grenze oder eines vorgegebenen Bereichs erfährt, wiedergeben.

Die Verteilungen können auch beliebig miteinander kombiniert werden.

Die Verteilungen können in beiden Richtungen gleich oder verschieden sein.

Durch die Verschiebung der Gitterpunkte entstehen vorteilhafterweise auch ungleichmäßige Gittermaschen oder Gitterzellen.

Durch die Ausführungsform gemäß dem weiteren Aspekt mit den zufällig oder pseudo-zufällig gesetzten und/oder in Länge und/oder Winkel zueinander variierten Gitterpunkten bzw. Kanten wird der Vorteil erzielt, dass die Gefahr des Auftretens von Beugungseffekten, insbesondere Moire-Effekten vermindert wird. Werden beispielsweise ein gemäß dem weiteren Aspekt ausgebildeter Mehrschichtkörper und ein Körper mit regelmäßig strukturierter Oberfläche, beispielsweise ein pixeliertes Display, einander überlagert, treten mangels optischer Interferenzen vermindert oder sogar gar keine Moire-Effekte auf. Selbiges gilt im Falle der Überlagerung eines ersten solchen Mehrschichtkörpers mit einem zweiten solchen Mehrschichtkörper dergestalt, dass die Flächennormalen der beiden Mehrschichtkörper parallel zueinander orientiert sind. Besonders gut werden dann Moire-Effekte vermindert oder vermieden, wenn der erste Mehrschichtkörper und der zweite Mehrschichtkörper zwar gemäß dem weiteren Aspekt ausgebildet sind, aber unterschiedlich zueinander ausgebildet sind.

Nun kehren wir zurück zu dem eigentlichen Hauptaspekt der vorliegenden Erfindung, bei dem nicht notwendigerweise eine Variation der oben genannten Art erfolgen muss:

Bei der Gestaltung eines durch die Anordnung bereitgestellten Musters in einem Layoutprogramm ist es vorteilhaft, wenn in beiden Bereichen dasselbe Muster zugrunde liegt, wobei dann dieses selbe Muster in dem dritten Bereich fortgeführt ist.

Diese bevorzugte Ausführungsform lässt sich angeben als ein Mehrschichtkörper mit einer Trägerschicht und auf der Trägerschicht zumindest einer Leitungsschicht mit elektrisch leitfähigen Leiterbahnen, wobei der Mehrschichtkörper einen ersten Bereich und einen zweiten Bereich aufweist, wobei sowohl in dem ersten Bereich als auch in dem zweiten Bereich jeweils Leiterbahnen dadurch galvanisch miteinander gekoppelt sind, dass sie in einer Anordnung bereitgestellt sind, in welcher die Leiterbahnen jeweils eine oder mehrere andere Leiterbahnen berühren, sodass die Anordnung ein regelmäßiges Muster aufweist oder durch eine (insbesondere stochastische) Variation eines zu einem regelmäßigen Muster definierten Parameters (Abstand zwischen zwei Leiterbahnen oder Winkel zwischen zwei Leiterbahnen) aus einem regelmäßigen Muster hervorgeht, wobei in beiden Bereichen dasselbe Muster zugrunde liegt, und wobei die beiden Bereiche durch einen dritten Bereich (eine Art Übergangsbereich) voneinander galvanisch getrennt sind, und wobei in dem dritten Bereich die Leiterbahnen derart angeordnet sind, dass das in den ersten und zweiten Bereichen zugrunde liegende Muster fortgeführt ist (oder wenigstens an sich fortgeführt ist), aber aus dem Muster derart Abschnitte ausgespart sind, dass Trennungsstellen in zumindest einer Leiterbahn gebildet sind, und wobei die ausgesparten Abschnitte durch an oder neben den Trennungsstellen angeordnete leitfähige Ersatzstücke ersetzt sind, welche so angeordnet sind, dass eine durch das Aussparen der Abschnitte bewirkte galvanische Trennung des ersten und des zweiten Bereichs aufrecht erhalten bleibt.

Die Abmessungen der einzelnen Komponenten hängen naturgemäß von dem Verwendungszweck des Mehrschichtkörpers ab; dies insbesondere davon, aus welcher Entfernung der Mehrschichtkörper im Gebrauch betrachtet wird: Wird der Mehrschichtkörper für eine Tastfeldfunktionalität in einem Mobilfunktelefon (etwa Smartphone) eingesetzt, dann beträgt der Abstand zum Betrachterauge ca. 80 cm. Wird der Mehrschichtkörper als Heizelement an einer Zimmerwand eingesetzt, beträgt der typische Betrachtungsabstand gegebenenfalls mehrere Meter.

Vorteilhaft ist es allerdings, wenn die Leiterbahnen auch schon bei Nahbetrachtung nicht als solche paarweise voneinander unterschieden werden können; dies ist insbesondere dann der Fall, wenn die Leiterbahnen eine, insbesondere gleichmäßige, Breite von zwischen 1 µm und 300 µm, bevorzugt von zwischen 5 µm und 50 µm aufweisen, und wenn die Ersatzstücke um höchstens das Dreifache, besonders um höchstens das Zweifache dieser Breite von den Leiterbahnen beabstandet sind.

Die Wirkung einer Vergleichmäßigung hinsichtlich der Transparenz/Transmission oder hinsichtlich des Anteils des reflektierten Lichts wird bei folgender Maßnahme erzielt: Die Ersatzstücke werden so nahe an den Trennungsstellen angeordnet, dass eine mittlere Belegung der Trägerschicht mit Material in der zumindest einen Leitungsschicht (also insbesondere mit elektrisch leitfähigem Material) über die ersten, dritten und zweiten Bereiche hinweg nicht mehr als um 15 %, bevorzugt nicht mehr als um 10 % und besonders bevorzugt nicht mehr als um 5 % schwankt. Die mittlere Belegung wird hierbei jeweils zu Flächeneinheiten (Einheitsquadraten oder Kreisen) mit einer Abmessung von zwischen 10 und 300 µm, bevorzugt von zwischen 20 und 80 µm in einer Erstreckungsrichtung ermittelt (die Abmessung wäre dann die Seitenlänge eines Quadrats bzw. der Durchmesser eines Kreises). Wenn das Material in der zumindest einen Leitungsschicht homogen ist, schwankt damit die Transparenz auch nicht mehr als um die genannten Prozentsätze. Sind die Ersatzstücke aus dem selben Material gebildet wie die Leiterbahnen (was herstellungstechnisch besonders einfach zu realisieren ist), schwankt auch der Anteil an reflektierendem Licht nicht mehr als um die genannten Prozentwerte.

Die ausgesparten Abschnitte können entweder Kreuzungspunkte bzw. Knotenpunkte von Leiterbahnen umfassen oder jenseits von solchen Kreuzungspunkten bzw. Knotenpunkten liegen. Mit anderen Worten sind bei der bevorzugten Ausführungsform die Aussparungen an Kreuzungspunkten in dem Muster bereitgestellt oder zwischen Kreuzungspunkten in dem Muster bereitgestellt.

Bei der Variante, dass die Aussparungen an Kreuzungspunkten bereitgestellt sind, sind bevorzugt die Ersatzstücke an jeweils zumindest einem Leiterbahnpaar angesetzt. Auf diese Weise kann die Anordnung symmetrisch um den noch virtuell vorhanden Kreuzungspunkt herum oder zumindest eine Spiegelachse in dem Muster ausgebildet werden. Kreuzungspunkte sind ein Bereich mit einer leichten Verdichtung in der mittleren Flächenbelegung, wo die Ersatzstücke besonders wenig auffallen.

Andererseits kann man dadurch, dass die Aussparungen zwischen Kreuzungspunkten bereitgestellt sind, die Ersatzstücke auf vielfältige Art und Weise jeweils passend, z. B. zu dem bevorzugt vorgesehenen Muster und insbesondere dem Verwendungszweck des Mehrschichtkörpers anordnen.

Bei einer ersten Ausführungsform, bei der die Aussparungen zwischen Kreuzungspunkten in dem Muster bereitgestellt sind, sind die Ersatzstücke (im bevorzugten Fall gegenüber den Leiterbahnen des zugrunde liegenden Musters) voneinander weg verkippte Leiterbahnteile. Bevorzugt werden die beiden Leiterbahnteile um den selben Winkel voneinander weg verkippt, jeweils von ihren Ansatzstücken her, sodass zum Beispiel bei geradlinigen Leiterbahnen diese verkippten Leiterbahnteile parallel zueinander stehen können; dann fällt einem Betrachter der jeweils ausgesparte Abschnitt nicht sonderlich auf.

Bei dieser Ausführungsform gibt es zwei Varianten: In einer Variante sind die Leiterbahnteile jeweils gegenüber Kreuzungspunkten verkippt. Man hat somit als "Knickstelle" keine zusätzliche Stelle, sondern besagten Kreuzungspunkt. Dies kann man sehr unauffällig gestalten.

Bei einer anderen Variante sind die verkippten Leiterbahnteile jeweils gegenüber von den Kreuzungspunkten wegstehenden anderen Leiterbahnteilen verkippt. Die "Knickpunkte" liegen daher zwischen zwei Kreuzungspunkten. Durch das Wegknicken der Leiterbahnteile in zuvor nicht von Leiterbahnteilen erfüllte Flächenbereiche hinein kann sogar in erhöhtem Maße für eine Vergleichmäßigung der Flächenbelegung in dem dritten Bereich gesorgt werden.

Um unerwünschte Beugungseffekte zu vermeiden, können hierbei die verkippten Leiterbahnteile in genau demselben Winkel verkippt sein, in dem die Leiterbahnen oder auch Leiterbahnteile von dem Kreuzungspunkt wegstehen. Die verkippten Leiterbahnteile verlaufen daher parallel zu den anderen Leiterbahnen bzw. Leiterbahnteilen und erzeugen daher keine störenden Beugungseffekte, die außerhalb des dritten Bereichs nicht auftreten.

Eine weitere Ausführungsform, bei der die Aussparungen zwischen Kreuzungspunkten in den Leiterbahnen bereitgestellt sind, sieht vor, dass die Ersatzstücke neben Leiterbahnteile gesetzt sind.

Alternativ können sie an die Leiterbahnteile angesetzt sein, insbesondere unter Bildung einer T-Form oder einer Pfeilform oder einer Stulpenform.

Bei allen genannten Ausführungsformen, bei denen die Aussparungen zwischen Kreuzungspunkten bereitgestellt sind, kann man in dem dritten Bereich folgende Maßnahme treffen, die in besonderem Maße für eine Vergleichmäßigung des visuellen Eindrucks des Mehrschichtkörpers sorgt: Zumindest zwei Aussparungen in benachbarten Leiterbahnen (des Musters) im dritten Bereich sind hierbei jeweils zwischen einem Paar von Kreuzungspunkten unterschiedlich von zwei zueinander benachbarten Kreuzungspunkten beabstandet. Dies lässt sich insbesondere dazu nutzen, die Möglichkeit auszuschließen, durch mehrere Aussparungen hindurch eine gerade Linie zu ziehen; eine solche gerade Linie wäre auch dann, wenn die Aussparungen in sehr schmalen Leiterbahnen über eine geringe Länge vorgesehen sind, noch für einen Betrachter erkennbar.

Das zugrunde liegende Muster der Leiterbahnen kann ein Gittermuster mit viereckigen, insbesondere quadratischen oder rautenförmigen Zellen sein; genauso gut sind auch dreieckige Zellen oder sechseckige Zellen möglich, bei denen die Leiterbahnen in einem Winkel von 60° bzw. 120° aufeinandertreffen.

Eine ganz andere Art von Muster beinhaltet regelmäßige ungeradlinige Teilmuster, in denen die Abschnitte ausgespart sind; die Ersatzstücke werden dann dadurch bereitgestellt, dass die regelmäßigen ungeradlinigen Teilmuster gestaucht werden, sich aber letztlich über dieselbe Anzahl von (Teil-)Perioden erstrecken. Der durch die Stauchung gewonnene Raum wird dann durch die Trennungsstelle eingenommen.

Das Teilmuster kann insbesondere wellenförmig sein, insbesondere sogar sinusförmig.

Nach an sich bekannter Art und Weise kann der Mehrschichtkörper als erster und zweiter Bereich eine Mehrzahl von Sendebereichen (z. B. als erster Bereich) und Empfangsbereichen (z. B. als zweiter Bereich) zur Bereitstellung einer Tastfeldfunktionalität aufweisen. Es sind auch weitere Arten von Bereichen möglich, wie z. B. Verbindungsbereiche, über die mehrere Sendebereiche oder mehrere Empfangsbereiche miteinander galvanisch gekoppelt werden. Die Erfindung bezieht sich in diesem Falle auch auf die galvanische Trennung zwischen solchen weiteren Bereichen (als zweite Bereiche) und den ersten Bereichen oder solchen weiteren Bereichen (als ersten Bereichen) und den zweiten Bereichen; jeweils befinden sich dann dritte Bereiche als Übergangsbereiche zwischen diesen Paarungen von Bereichen.

Die eingangs genannten Verwendungen gelten bevorzugt für den Mehrschichtkörper: Bei einer ersten Verwendung ist der Mehrschichtkörper eine Tastfeldeinrichtung oder Teil einer solchen. Eine Bedienvorrichtung mit Anzeigeelement kann insbesondere eine einzige berührungsempfindliche Schicht aufweisen, oder sie kann zweilagig aufgebaut sein. Bei einer zweiten Verwendung ist der Mehrschichtkörper ein Heizelement. Andere Verwendungen sind möglich.

Nachfolgend werden bevorzugte Ausführungsformen der Erfindung unter Bezug auf die Zeichnung näher beschrieben, in welcher
Fig. 1a eine schematische Draufsicht auf einen Mehrschichtkörper zeigt,
Fig. 1b eine schematische Schnittdarstellung eines Mehrschichtkörpers zeigt,
Fig. 2a-2d schematische Darstellungen eines Ausschnitts aus einem Muster von elektrisch leitfähigen nicht transparenten Bahnen zeigen,
Fig. 3a eine vergrößerte Darstellung von Leiterbahnen in einem Muster nach Art von Fig. 2a ist und
Fig. 3b einen solchen Ausschnitt mit einer Mehrzahl von ausgesparten Abschnitten in den Leiterbahnen veranschaulicht, die in ihrer Gesamtheit visuell erkennbar und daher störend sind,
Fig. 4 einen Ausschnitt aus einem Muster von Leiterbahnen veranschaulicht, bei dem eine erste Ausführungsform der Erfindung verwirklicht ist,
Fig. 5 einen Ausschnitt aus einem Muster von Leiterbahnen veranschaulicht, bei dem eine zweite Ausführungsform der Erfindung verwirklicht ist,
Fig. 6 einen Ausschnitt aus einem Muster von Leiterbahnen veranschaulicht, bei dem eine dritte Ausführungsform der Erfindung verwirklicht ist,
Fig. 7 einen Ausschnitt aus einem Muster von Leiterbahnen veranschaulicht, bei dem eine vierte Ausführungsform der Erfindung verwirklicht ist,
Fig. 8 einen Ausschnitt aus einem Muster von Leiterbahnen veranschaulicht, bei dem eine fünfte Ausführungsform der Erfindung verwirklich ist,
Fig. 9 einen Ausschnitt aus einem Muster von Leiterbahnen veranschaulicht, bei dem eine sechste Ausführungsform der Erfindung verwirklicht ist,
Fig. 10a und 10b anhand der Lage der ausgesparten Abschnitte eine bevorzugte, bei mehreren Ausführungsformen einsetzbare Variante der Erfindung erläutert,
Fig. 11a-11e verschiedene Ausführungsformen der Erfindung veranschaulichen, bei denen in einem Knotenpunkt von Leiterbahnen ein Abschnitt ausgespart ist und ein Ersatzstück bereitgestellt ist,
Fig. 12a drei in einem Winkel von 120° aufeinandertreffende Leiterbahnen zeigt und
Fig. 12b-12d hierzu Ausführungsformen der Erfindung veranschaulichen, bei denen in dem Knotenpunkt der Leiterbahnen ein Abschnitt ausgespart ist,
Fig. 13a eine wellenförmige Leiterbahn veranschaulicht,
Fig. 13b eine Ausführungsform der Erfindung veranschaulicht, bei der einzelne Abschnitte der Wellenform gestaucht sind,
Fig. 14a eine Gitter- und/oder Musteranordnung von Leiterbahnen zur Ansteuerung von Tastfeldern veranschaulicht, wie sie den Ausgangspunkt für die Definition der Gitter- und/oder Musteranordnung nach Fig. 14b bildet,
Fig. 14b eine Gitter- und/oder Musteranordnung von Leiterbahnen zur Ansteuerung von Tastfeldern veranschaulicht, wie sie gemäß einem weiteren Aspekt in einer Ausführungsform ausgehend von der Gitter- und/oder Musteranordnung aus Fig. 14a vorgeschlagen wird;
Fig. 15a bis 15d die Graphen von Verteilungskurven zeigen,
Fig. 16 ein weiteres Beispiel für eine Gitter- und/oder Musteranordnung gemäß dem weiteren Aspekt veranschaulicht,
Fig. 17a eine Anordnung von Leiterbahnen in einem Gittermuster veranschaulicht, bei der sowohl eine Ausführungsform der Erfindung verwirklicht ist, als auch der weitere Aspekt, der anhand der Fig. 14a bis 16 erläutert wurde, umgesetzt ist,
Fig. 17b einen vergrößerten Ausschnitt aus der Anordnung gemäß Fig. 17a zeigt, und
Fig. 18a und 18b ein weiteres Beispiel für eine Gitter- und/oder Musteranordnung nach dem weiteren Aspekt veranschaulichen,
Fig. 19 eine Tastfeldvorrichtung mit unterschiedlich geformten Tastfeldern veranschaulicht.

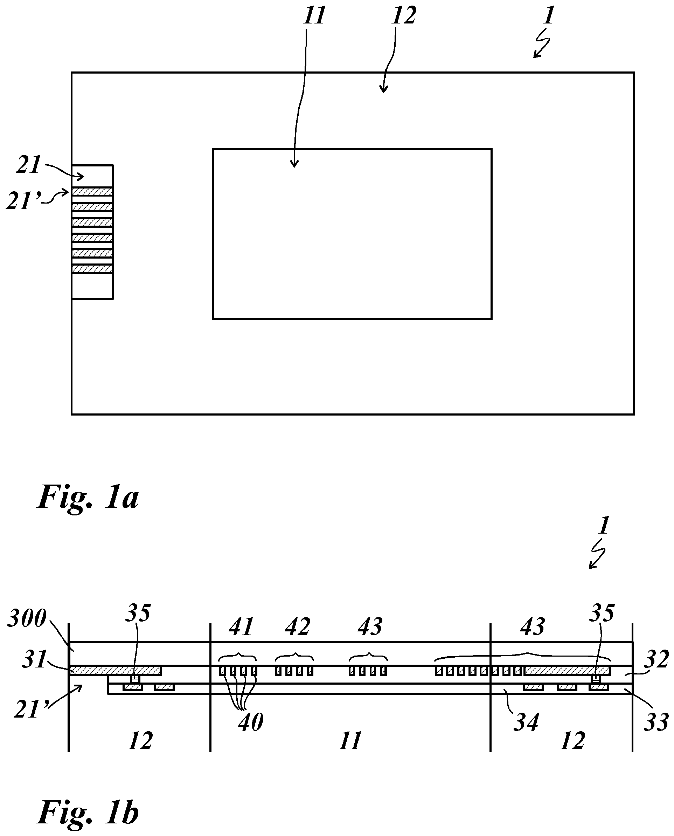

Fig. 1a zeigt eine Draufsicht und Fig. 1b eine Schnittdarstellung eines Mehrschichtkörpers 1. Der Mehrschichtkörper 1 weist ein Trägersubstrat 300 auf, das man auch als Trägerschicht 300 ansehen kann. Auf dem Trägersubstrat 300 befindet sich eine erste elektrisch leitfähige Schicht 31, darauf eine dielektrische Schicht 32, eine zweite elektrisch leitfähige Schicht 33 sowie eine dielektrische Schicht 34.

Es ist auch möglich, dass der Mehrschichtkörper 1 nicht sämtliche der vorgenannten Schichten aufweist, sondern lediglich aus der Trägerschicht 300 und der ersten elektrisch leitfähigen Schicht 31 (Leitungsschicht) besteht. Weiter ist es möglich, dass der Mehrschichtkörper 1 neben den in Fig. 1b gezeigten Schichten noch weitere Schichten umfasst, beispielsweise eine oder mehrere Dekorschichten oder weitere elektrisch leitfähige Schichten.

Der Mehrschichtkörper 1 weist einen Bereich 11 auf, in welchem der Mehrschichtkörper 1 für den menschlichen Betrachter transparent erscheint; und er weist einen Bereich 12 auf, in dem der Mehrschichtkörper 1 für den menschlichen Betrachter entweder ebenfalls transparent erscheint, oder auch semi-transparent oder opak ausgebildet sein kann. Weiter weist der Mehrschichtkörper 1 einen Kontaktverbinder 21 mit mehreren Kontaktfeldern 21' auf, über welchen eine elektrische Kontaktierung des Mehrschichtkörpers möglich ist. Es ist jedoch auch möglich, dass der Mehrschichtkörper 1 nicht über einen derartigen Kontaktverbinder verfügt, und dass die Kontaktierung der elektrisch leitfähigen Schicht bzw. Schichten des Mehrschichtkörpers mittels elektrisch leitfähigen Klebeverbindungen, Bondverbindungen, Löt- oder Schweißverbindungen erfolgt.

Der Bereich 11 lässt sich grob in einen Randbereich R und einen zentralen Bereich Z unterteilen.

Das Trägersubstrat 300 besteht vorzugsweise aus einer flexiblen Kunststofffolie, beispielsweise aus Polyethylen (PE), Polypropylen (PP), Polyvinylchlorid (PVC), Polystyrol (PS), Polyester (PE) und/oder Polycarbonat (PC) oder aus einer beliebigen Mischung daraus. Die flexible Kunststofffolie weist vorzugsweise Schichtdicken von zwischen 15 µm und 300 µm auf, bevorzugt von zwischen 23 µm und 100 µm. Das Trägersubstrat 300 ist zumindest in dem Bereich 11 transparent ausgebildet; vorzugsweise ist das Trägersubstrat jedoch vollflächig ausgebildet und besteht so beispielsweise aus einer transparenten Kunststofffolie.

Die erste elektrisch leitfähige Schicht 31 besteht vorzugsweise aus einem Metall, beispielsweise Kupfer, Aluminium, Chrom, Silber oder Gold, und/oder einer Mischung oder Legierung aus zumindest zwei der vorgenannten Materialien. Diese Metallschicht ist bevorzugt in einer Schichtdicke von zwischen 2 nm und 5 µm, besonders bevorzugt von zwischen 20 nm und 100 nm auf das Trägersubstrat 30 aufgebracht und strukturiert. Es kann ein Verfahren des Druckens zum Strukturieren eingesetzt werden. Das Aufbringen und Strukturieren kann auch in einem Schritt erfolgen, z. B. wenn eine Aufbringungsmaske eingesetzt wird. Anstelle eines Metalls oder zusätzlich kann auch eine leitfähige Paste und/oder eine organische Verbindung mit bewegungsfähigen Ladungsträgern wie etwa Polyanilin oder Polythiophen vorgesehen sein.

Zwischen dem Trägersubstrat 300 und der ersten elektrisch leitfähigen Schicht 31 kann auch eine Haftvermittlungsschicht angeordnet sein, welche das Anhaften der ersten elektrisch leitfähigen Schicht 31 an dem Trägersubstrat 300 verbessert. Eine derartige Haftvermittlungsschicht ist vorzugsweise ebenfalls aus einem transparenten Material ausgebildet.

In der ersten elektrisch leitfähigen Schicht 31 sind in dem Bereich 11 eine Vielzahl von elektrisch leitfähigen Bereichen 41 erster Klasse vorgesehen, eine Vielzahl von elektrisch leitfähigen Bereichen 42 zweiter Klasse vorgesehen, und Verbindungsbereiche 43. Die elektrisch leitfähigen Bereiche 41 der ersten Klasse und die elektrisch leitfähigen Bereiche 42 der zweiten Klasse sind galvanisch voneinander getrennt, damit die elektrisch leitfähigen Bereiche 41 der ersten Klasse als Sendebereiche dienen können, welche ein elektromagnetisches Feld aussenden, und die elektrisch leitfähigen Bereiche 42 der zweiten Klasse als Empfangsbereiche dienen können, die von einem Bereich der ersten Klasse ein elektromagnetisches Feld empfangen. Die elektrisch leitfähigen Bereiche 41, 42 und 43 bestehen jeweils aus einem Muster von elektrisch leitfähigen, nicht-transparenten Leiterbahnen 40 oder alternativ wärmeleitfähigen Bahnen, deren Breite im ersten Bereich 11 so gewählt ist, dass die elektrisch leitfähigen Bereiche erster und zweiter Klasse und die Verbindungsbereiche für das menschliche Auge transparent erscheinen. Die Bahnen 40 besitzen so beispielsweise eine Breite von zwischen 1 µm und 300 µm, bevorzugt von zwischen 5 µm und 50 µm. Die Verbindungsbereiche 43 verbinden jeweils einen oder mehrere der Bereiche 41 der ersten Klasse oder der Bereiche 42 der zweiten Klasse mit einem außerhalb des Bereichs 11 angeordneten Kontaktbereich. Dabei ist es auch möglich und vorteilhaft, dass die Verbindungsbereiche 43 außerhalb des Bereichs 11 vollflächig mit der elektrisch leitfähigen Schicht 31 belegt sind, oder mit einem Muster von elektrisch leitfähigen, nicht-transparenten Bahnen 40 belegt sind, deren Breite so gewählt ist, dass die Bereiche 43 in diesem Bereich 12 für das menschliche Auge nicht transparent erscheinen. Hierdurch ist es möglich, in dem Bereich 12 die Leitfähigkeit der Bereiche 43 zu erhöhen, dies auf Kosten der Transparenz, die jedoch in diesem Bereich nicht mehr von Relevanz ist.

Kontaktbereiche können hierbei von den Kontaktfeldern 21' des Kontaktverbinders 21 ausgebildet werden, es ist hier jedoch auch möglich, dass ein Kontaktbereich einen Bereich darstellt, in dem die erste leitfähige Schicht 31, beispielsweise über ein Via, mit einer anderen elektrisch leitfähigen Schicht kontaktiert wird; der Kontaktbereich kann auch von einem Bereich der ersten elektrisch leitfähigen Schicht 31 ausgebildet werden, in dem eine (für den menschlichen Betrachter opak erscheinende) Verbindungsbahn der elektrisch leitfähigen Schicht 31 in einen (für den menschlichen Betrachter transparent erscheinenden) Bereich 43 der ersten Klasse übergeht.

Wie in Fig. 1b angedeutet, sind in der ersten leitfähigen Schicht 31 auch die Kontaktfelder 21' des Kontaktverbinders 21 ausgebildet. Es ist jedoch auch möglich, dass die Kontaktfelder 21' nicht in der elektrisch leitfähigen Schicht 31, sondern in einer anderen elektrisch leitfähigen Schicht, beispielsweise in der elektrisch leitfähigen Schicht 33 ausgebildet sind. Im Bereich der Kontaktfelder 21 kann hierbei die erste elektrisch leitfähige Schicht 31 über eine größere Schichtdicke verfügen oder auch mit einem anderen oder dem gleichen elektrisch leitfähigen Material nachverstärkt sein.

Auf der ersten elektrisch leitfähigen Schicht 31 wird sodann die dielektrische Schicht 32 aufgebracht. Bei der dielektrischen Schicht 32 handelt es sich vorzugsweise um einen transparenten Lack, der mittels eines Druckverfahrens in einer Schichtdicke von 1 µm bis 40 µm auf die elektrisch leitfähige Schicht 31 aufgebracht wird. Hierbei ist es vorteilhaft, wenn bereits beim Aufbringen der dielektrischen Schicht 32 in den Bereichen, in denen später Vias 35 vorzusehen sind, kein Material aufgebracht wird.

Weiter wird sodann die elektrisch leitfähige Schicht 33 aufgebracht. Bei der zweiten elektrisch leitfähigen Schicht 33 handelt es sich vorzugsweise um eine Schicht, welche mittels Druckens eines elektrisch leitfähigen Druckstoffes, beispielsweise Carbon-Black oder Leitsilber aufgebracht ist. Hierbei können beim Aufdrucken gleichzeitig die in der dielektrischen Schicht 32 vorgesehenen Ausnehmungen mit dem Druckstoff befüllt werden und so gleichzeitig die Vias 35 durch die dielektrische Schicht 32 mit leitfähigem Material befüllt werden. Die leitfähige Schicht 33 ist vorzugsweise so strukturiert, dass mittels dieser Schicht mehrere der Verbindungsbereiche 43 der elektrisch leitfähigen Schicht 31 miteinander elektrisch verbunden werden und so die Anzahl der Kontaktfelder 21 des Kontaktverbinders 20 reduziert werden kann.

Vorzugsweise sind in dem Bereich 11 neben der elektrisch leitfähigen Schicht 31 keine weiteren elektrisch leitfähigen Schichten in dem Mehrschichtkörper 1 vorgesehen.

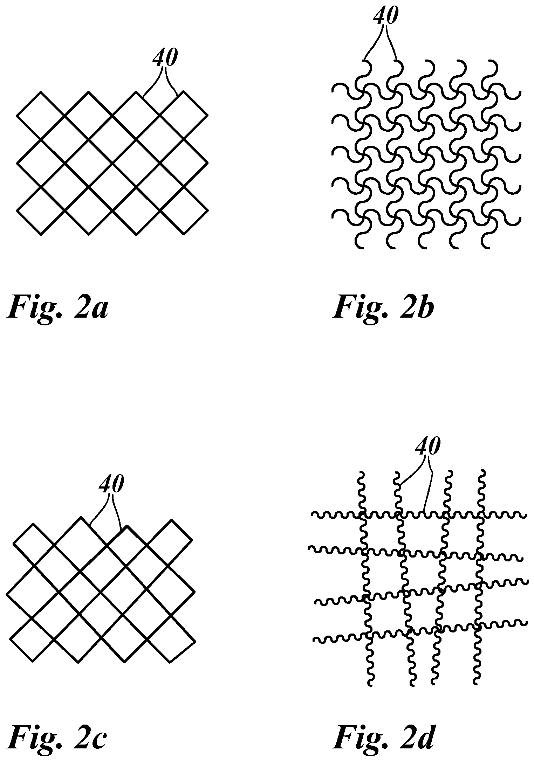

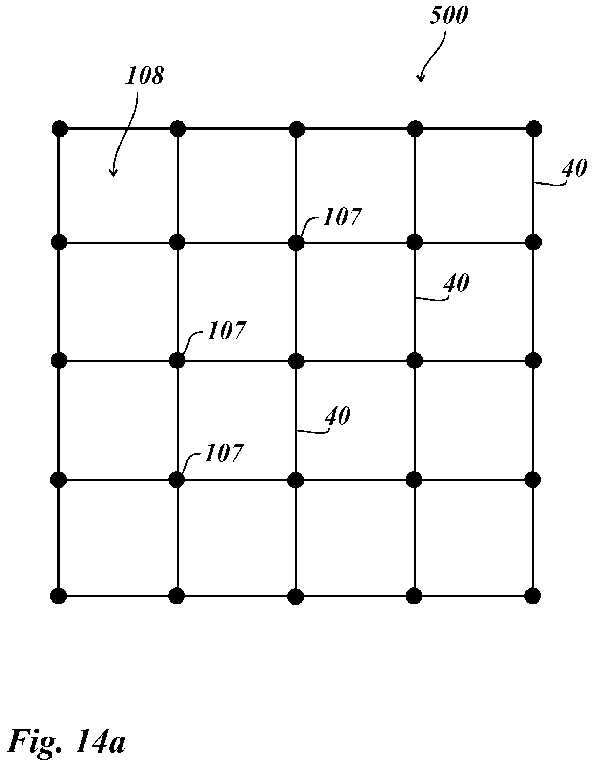

Die elektrisch leitfähigen Bahnen 40 in den drei Arten von Bereichen 41, 42, 43 sind bevorzugt gemäß einem der in den Fig. 2a bis 2d verdeutlichten Muster angeordnet. Fig. 2a und 2b verdeutlichen ein regelmäßiges Muster mit Kreuzungspunkten. Wie in den Fig. 2c und 2d gezeigt, sind die elektrisch leitfähigen Bahnen 40 hierbei zur Vermeidung von Beugungs- und Moire-Effekten möglichst nicht parallel zueinander angeordnet und weisen eine Vielzahl von Kreuzungspunkten auf, um so eine möglichst gleichfähige Flächenleitfähigkeit in den Bereichen 41, 42 und 43 bereit zu stellen. Die Muster gemäß Fig. 2c und 2d gehen durch stochastische Variation eines Gitterparameters (Gitterabstand, Winkel zwischen Leiterbahnen 40) aus einem regelmäßigen Muster hervor. Solche Muster werden weiter unten näher unter Bezug auf die Fig. 14a bis 18b beschrieben.

Die elektrisch leitfähigen Bahnen 40 grenzen jeweils einen Flächenbereich ab. Die Abgrenzung erfolgt dadurch, dass eine jeweils äußere leitfähige Bahn 40 zur leitfähigen Bahn 40 eines anderen Flächenbereichs beabstandet ist und galvanisch von diesem getrennt ist. Die einzelnen Flächenbereiche haben eine Fläche von zwischen 0,25 und 10 cm². Die Breite und Beabstandung der leitfähigen opaken Bahnen in den einzelnen Flächenbereichen ist so gewählt, dass diese Bereiche eine mittlere Flächenleitfähigkeit zwischen 5 Ohm (Ohm square) und 100 Ohm (Ohm square), bevorzugt zwischen 10 Ohm (Ohm square) und 40 Ohm (Ohm square) aufweisen.

In Fig. 1b sind die einzelnen Flächenbereiche 41 und 42 als erste und zweite Bereiche so weit voneinander beabstandet gezeigt, dass allein durch die Weglassung von Leiterbahnen eine galvanische Trennung erfolgen kann.

Man ist nun dazu übergegangen, Muster nach Art der in Fig. 2a bis 2d gezeigten Muster zunächst durchgehend zu planen und bei der Planung sodann einzelne Abschnitte auszusparen, durch welche eine galvanische Trennung eines ersten Bereichs (etwa Flächenbereich 41) von einem zweiten Bereich (etwa Flächenbereich 42) bereitgestellt wird. Die vorliegende Erfindung befasst sich nun mit der Fragestellung, wie solche Aussparungen möglichst unauffällig, den Betrachtungseindruck des Mehrschichtkörpers 1 möglichst wenig beeinflussend, bereitgestellt werden können.

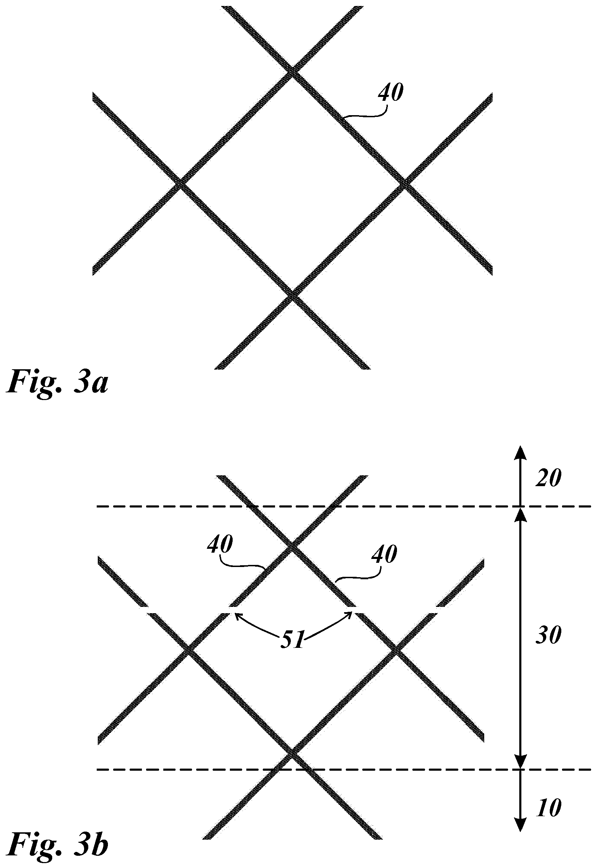

Fig. 3a zeigt nochmals in vergrößerter Darstellung die Leiterbahnen 40 gemäß dem Muster nach Fig. 2a. Das hier Beschriebene gilt aber entsprechend auch für andere Muster, etwa den in Fig. 2b bis 2d gezeigten, wobei diese Muster entweder regelmäßig sein können oder durch, insbesondere stochastische, Variationen eines Musterparameters wie etwa Abstand zwischen Leiterbahnen 40 und Winkel, in welchem sie in einem Knotenpunkt aufeinander treffen, erzeugt sein kann.

Das Muster gemäß Fig. 3a hat den Vorteil einer im Wesentlichen gleichmäßigen Flächenbelegung, wenn diese Flächenbelegung über Bereiche ermittelt wird, die mehrere Zellen des gezeigten Gitters umfassen. Fig. 3a zeigt nun einen Übergangsbereich zwischen einem ersten Bereich 10 und einem zweiten Bereich 20, die galvanisch voneinander getrennt sein sollen. Der Übergangsbereich ist hierbei mit 30 bezeichnet.

In dem Übergangsbereich 30 wird das Muster aus dem ersten Bereich 10 und dem zweiten 20 (an sich) fortgesetzt. Vorliegend wird lediglich in Leiterbahnen 40 jeweils eine Aussparung 51 vorgesehen. Die Aussparungen 51 fluchten, sodass für den Betrachter schon von weitem her eine Unterbrechung in der Flächenbelegung nach Art eines durchsichtigen strichförmigen Bereichs zu erkennen ist. Die Erfindung möchte es hingegen vermeiden, dass solche ausgesparten Abschnitte 51 für den Betrachter erkennbar sind.

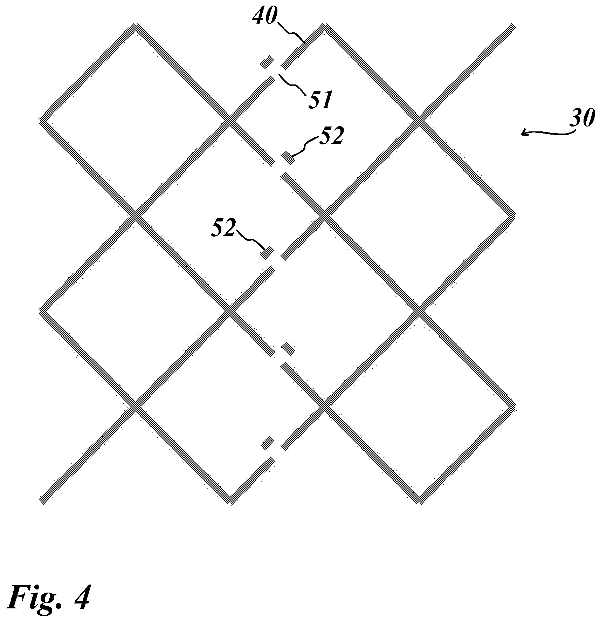

Fig. 4 zeigt eine erste Ausführungsform der Erfindung, bei der in einem Übergangsbereich 30 unter Erzeugung einer Aussparung 51 die ausgesparten Abschnitte durch Ersatzstücke 52 ersetzt werden, die genau dieselbe Größe haben wie die ausgesparten Abschnitte. Dies lässt sich z. B. sehr leicht in einem Steuerprogramm zum Herstellen der Leiterbahnen 40 verwirklichen, indem zunächst (in einem ersten sog. "Layer") die Aussparungen definiert werden, wobei Abschnitte herausgeschnitten werden, und wobei genau diese Abschnitte 52 dann lediglich etwas verschoben werden (und in einem zweiten "Layer" bereitgestellt werden). Dadurch, dass die ausgesparten Abschnitte lediglich verschoben werden, sind die Ersatzstücke nichts anderes als die ausgesparten Abschnitte selbst und naturgemäß gleich groß wie diese. Bei der Erfindung ist es jedoch sowohl bei der ersten Ausführungsform gemäß Fig. 4 als auch bei allen weiteren Ausführungsformen an sich möglich, dass die Ersatzstücke größer oder kleiner sind als die ausgesparten Abschnitte. Bevorzugt variieren sie allerdings nicht um +/- 50 %, besonders bevorzugt nicht mehr als um +/- 20 % in ihrer Flächenausdehnung hinsichtlich der ausgesparten Abschnitte.

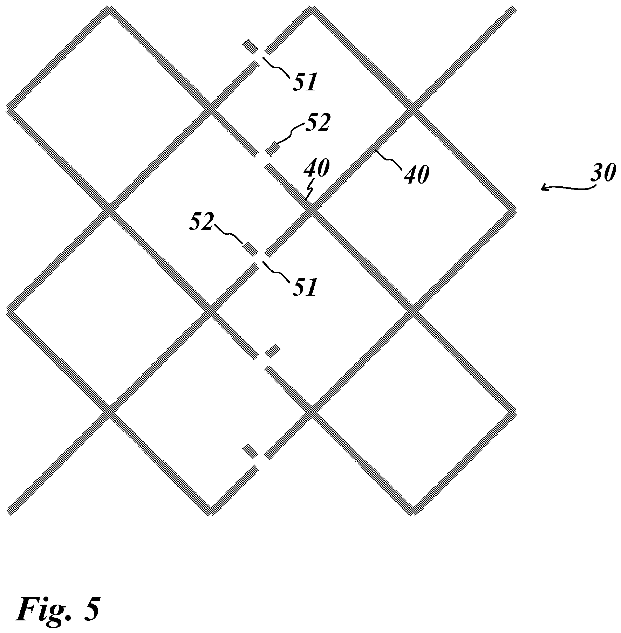

Bei der zweiten Ausführungsform der Erfindung gemäß Fig. 5 sind die Ersatzstücke 52 ebenfalls gleich den ausgesparten Abschnitten im Bereich der Aussparungen 51, sie sind aber um 90° gedreht. Eine Drehung um einen anderen Winkel wäre grundsätzlich ebenfalls möglich. Die Drehung um 90° hat den Vorteil, dass die Ersatzstücke die Form kleiner Leiterbahnteile haben, die parallel zu den Leiterbahnen 40 im dritten Bereich 30 verlaufen.

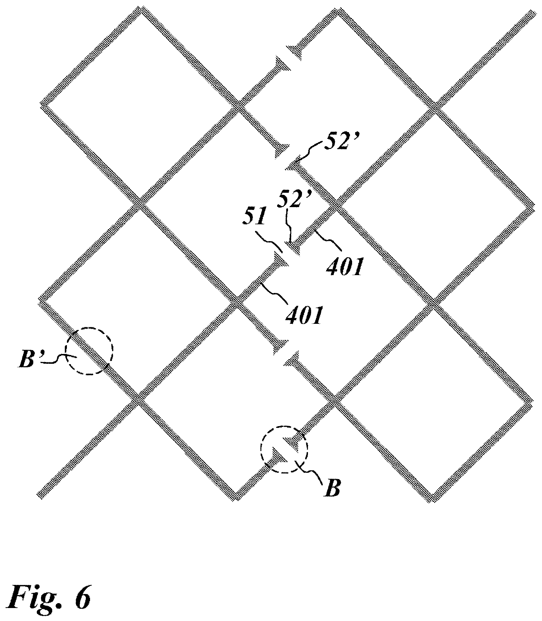

Bei einer dritten Ausführungsform der Erfindung gemäß Fig. 6 sind die ausgesparten Abschnitte in vier Teile geteilt, die in Form kleiner Dreiecke 52' beidseitig der Leiterbahnteile 401 angeordnet sind, sodass sich die Form eines Stulpens ergibt. Die Ersatzstücke 52' sind somit an die Leiterbahnen 40 bzw. Leiterbahnteile 401 angesetzt. Durch die Stulpenform ergibt sich eine Verdickung der Leiterbahnteile 401 an ihrem dem ausgesparten Abschnitt 51 zugewandtem Ende, wobei durch diese Verdickung bewirkt wird, dass über einen Flächenbereich B (strichlierter Kreis eingezeichnet in Fig. 6) hinweg eine gleiche Flächenbelegung erzielt wird wie in einem Bereich B', wo keine Aussparung 51 vorgesehen ist. Die typische (Durchmesser-)Abmessung des Bereichs B beträgt zwischen 20 und 80 µm.

Bei einer vierten Ausführungsform der Erfindung sind die ausgesparten Abschnitte in zwei Teile geteilt und unter Bildung einer T-Form an die Leiterbahnteile 401 angesetzt. Die beiden Hälften 52a und 52b haben denselben Flächeninhalt wie der ausgesparte Abschnitt 51. Grundsätzlich können sie aber auch, wie oben bereits ausgeführt um zwischen +/- 50 % hinsichtlich ihres Flächeninhalts gegenüber dem ausgesparten Abschnitt 51 (bzw. der Hälfte desselben) variieren.

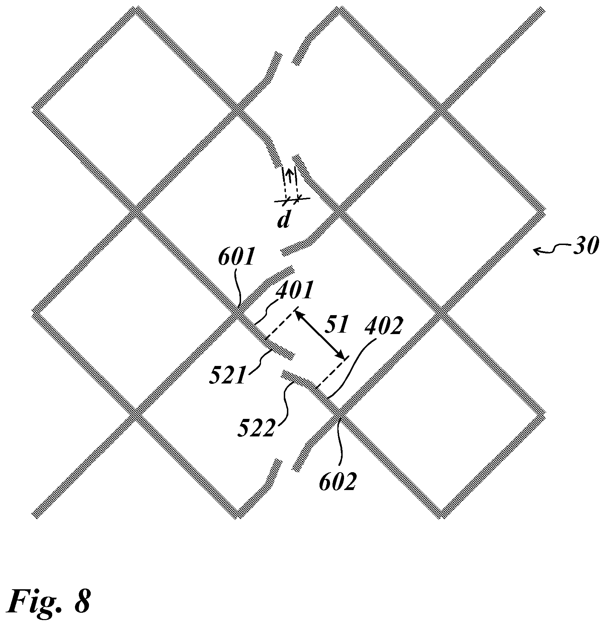

Eine fünfte Ausführungsform der Erfindung, die anhand von Fig. 8 erläutert wird, macht Gebrauch von einem etwas anderen Prinzip: Hier werden Leiterbahnteile 521, 522 zunächst herausgeschnitten, sodass der ausgesparte Abschnitt 51 relativ groß ist. Sodann werden die herausgeschnittenen Leiterbahnteile 521, 522 als Ersatzstücke wieder eingesetzt, aber gegenüber ihrer ursprünglichen Lage verkippt eingesetzt, und zwar jeweils um denselben Winkel bezüglich der Leiterbahnteile 401 und 402, die zwischen den Knotenpunkten 601 und 602 verblieben sind. Die galvanische Trennung ergibt sich aufgrund der Verkippung durch den Abstand d zwischen den Leiterbahnteilen 521 und 522.

Eine sechste Ausführungsform der Erfindung ist nichts anderes als eine Variante der Ausführungsform gemäß Fig. 8: Hier sind keine Leiterbahnteile 401 und 402 mehr übrig, sondern es werden sogleich Leiterbahnteile 521, 522 an den Knotenpunkten 601, 602 abgetrennt. Die Aussparung 51 hat somit die Länge einer Gitterkonstanten. In der Aussparung 51 werden nun die beiden ausgesparten Teilabschnitte, also die Leiterbahnteile 521 und 522, ebenfalls wieder verkippt eingesetzt.

Bei der Wahl des Verkippungswinkels kann darauf geachtet werden, dass unerwünschte Beugungseffekte vermieden werden. Insbesondere bei einem unregelmäßigen Gitter können die Leiterbahnteile 521, 522 im verkippten Zustand parallel zu anderen Leiterbahnen 40 verlaufen. (Dies ist in der Figur nicht veranschaulicht)

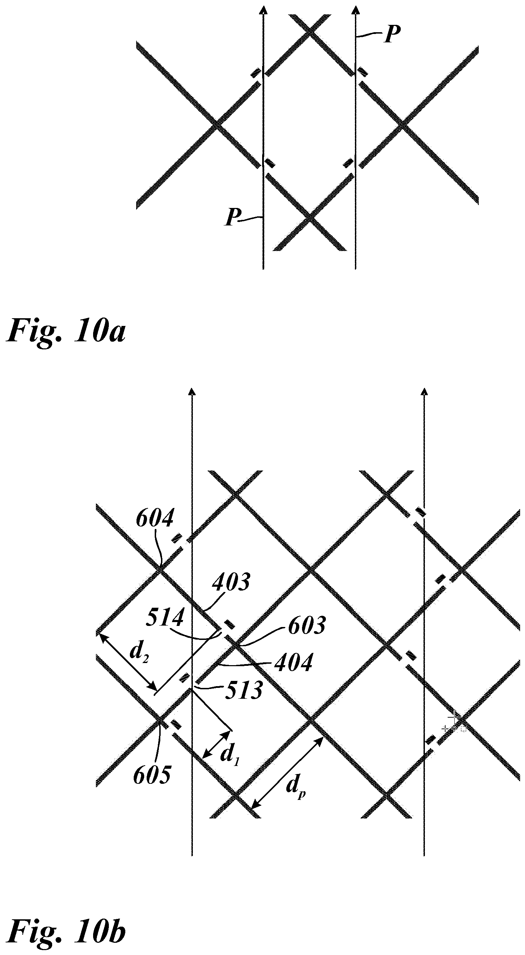

Bei allen vorgenannten Ausführungsformen sind die Aussparungen 51 jeweils zwischen zwei Knoten- bzw. Kreuzungspunkten angeordnet. Ihnen war aber bisher gemeinsam, dass die Aussparungen 51 auf einer geraden Linie liegen. Dies ist anhand der Ausführungsform gemäß Fig. 4 nochmals in Fig. 10a veranschaulicht, vergleich die Pfeile P.

Nun kann, in Fig. 10b veranschaulicht für die erste Ausführungsform gemäß Fig. 4, aber vorgesehen sein, dass zumindest zwei Aussparungen 513, 514 in benachbarten Leiterbahnen 403, 404 zwischen jeweils einem Paar von Kreuzungspunkten 603; 604 einerseits bzw. 603; 605 andererseits jeweils unterschiedlich von den zueinander benachbarten Kreuzungspunkten 604 und 605 beabstandet sind. Die Aussparung 513 liegt auf etwas weniger als der Hälfte einer Gitterperiode dp im Abstand d₁ vom Knotenpunkt 605 entfernt. Hingegen liegt die Aussparung 514 in einem Abstand d₂ vom Knotenpunkt 604 entfernt, der sich über mehr als die Hälfte einer Gitterperiode dp erstreckt.

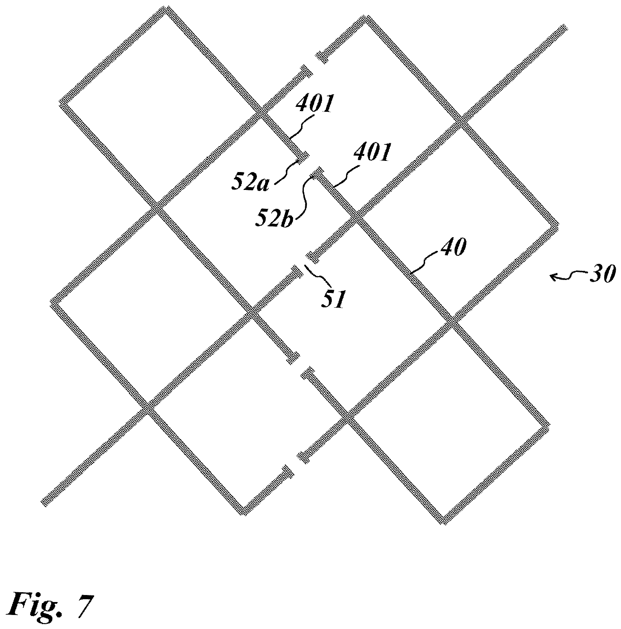

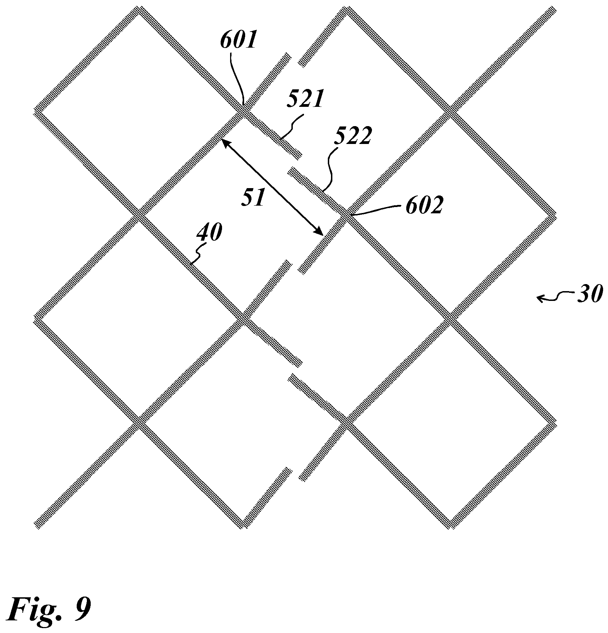

Dieses anhand von Fig. 10b erläuterte Prinzip ist auf die genannten Ausführungsformen gemäß Fig. 4 bis Fig. 9 sämtlich anwendbar.

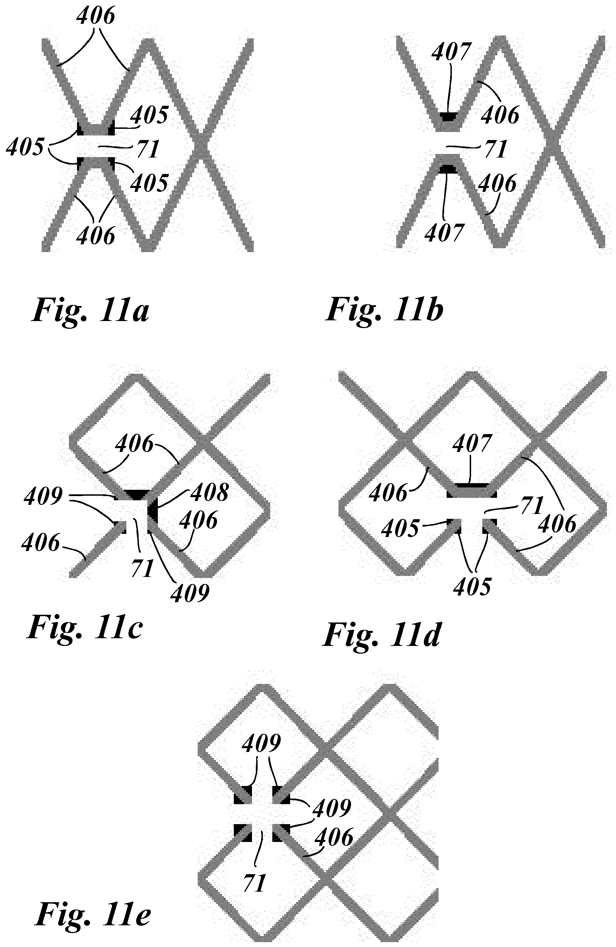

Neben diesen Ausführungsformen mit Aussparungen zwischen jeweils zwei Knotenpunkten können Aussparungen auch an dem Kreuzungs- bzw. Knotenpunkt vorgesehen sein, der Knotenpunkt kann also einfach entfallen. Entsprechende Ausführungsformen sind in den Fig. 11a bis 11e dargestellt:

Bei einer Ausführungsform gemäß Fig. 11a sind Aussparungen 71 in einem Knoten- bzw. Kreuzungspunkt vorgesehen, das Vorhandensein dieser Aussparungen wird jedoch durch das Ansetzen von kleinen Dreiecken 405 an die Leiterbahnteile 406, die zu dem entfallenen Kreuzungspunkt führen, ersetzt.

Bei der Ausführungsform gemäß Fig. 11b sind dieselben Dreiecke in die Kehlen zwischen die Leiterbahn 406 als Ersatzstücke 407 eingesetzt.

Die Ausführungsformen gemäß Fig. 11a und 11b sind vorliegend für rautenförmige Gitterzellen dargestellt, können jedoch auch grundsätzlich für quadratische Gitterzellen eingesetzt werden.

Bei quadratischen Gitterzellen gibt es ferner noch die Ausführungsform gemäß Fig. 11c, 11d und 11e: Bei der Ausführungsform gemäß 11c wird von allen vier Leiterbahnteilen 406 ein Stück herausgeschnitten, um die Aussparung 71 zu bilden. An einer Seite werden zwei größere Ersatzstücke 408 eingesetzt derart, dass sie die Aussparung 71 aufrecht erhalten. Ferner werden auch noch kleinere Ersatzstücke 409 vorgesehen.

Die Ausführungsform gemäß Fig. 11d ist gewissermaßen eine Kombination der Ausführungsformen gemäß Fig. 11a und 11b mit einem größeren Ersatzstück 407 in einer Kehle zwischen zwei Leiterbahnen 406 und ansonsten kleineren Ersatzstücken 405 in dreieckiger Form.

Bei Ausführungsform gemäß Fig. 11e ist eine Rotationssymmetrie gegeben, zu jeder Leiterbahn 406 werden zwei kleine dreieckige Ersatzstücke 409 vorgesehen.

Weitere Abwandlungen, die sich beispielsweise an den Ausführungsformen gemäß Fig. 4 bis Fig. 9 orientieren, sind ebenfalls möglich.

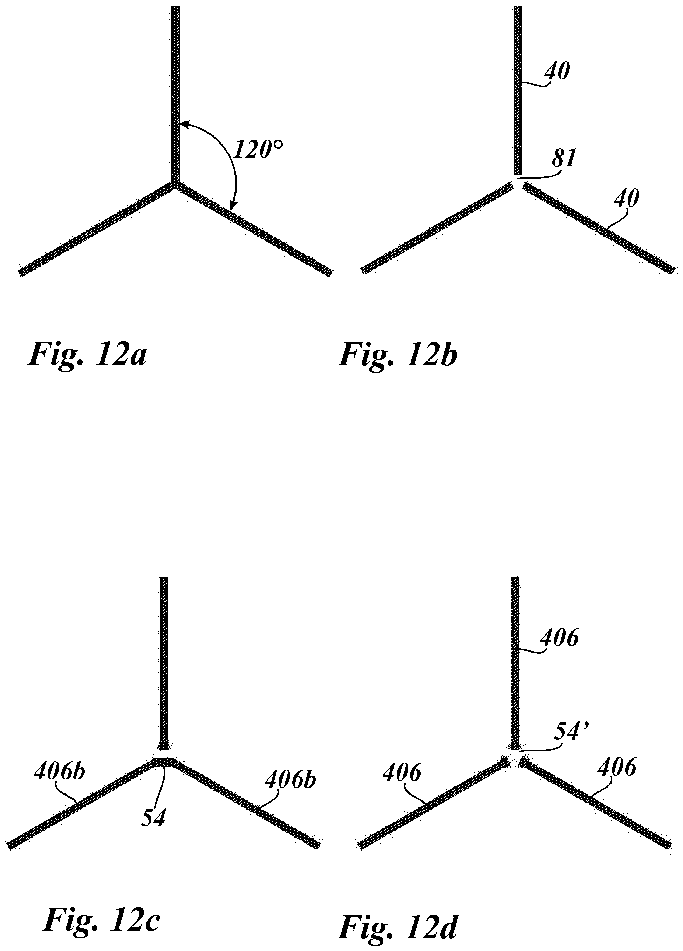

Anhand der Fig. 12a bis 12d wird nun erläutert, wie entsprechende Lösungen bei einem Muster mit sechseckiger Gitterzelle aussehen können: Hier stoßen die einzelnen Leiterbahnen in einem Winkel von 120° aufeinander, siehe Fig. 12a. Sieht man nun eine Aussparung 81 vor, vergleiche Fig. 12b, kann diese Aussparung 81 sichtbar sein, wenn man den Mehrschichtkörper mit solchen Mustern für die Leiterbahnen 40 betrachtet.

Bei einer Ausführungsform gemäß Fig. 12c wird nun ein Bereich der Aussparung 81 herausgeschnittener Abschnitt 54 wieder eingesetzt, und zwar so, dass die zwei unteren Leiterbahnen 406b und 406b galvanisch miteinander verbunden sind.

Bei der Ausführungsform gemäß Fig. 12d wird der herausgenommene Abschnitt in sechs Teile geteilt, und dieser wird an die Leiterbahnteile 406 angesetzt, siehe Abschnitte 54' in Fig. 12d.

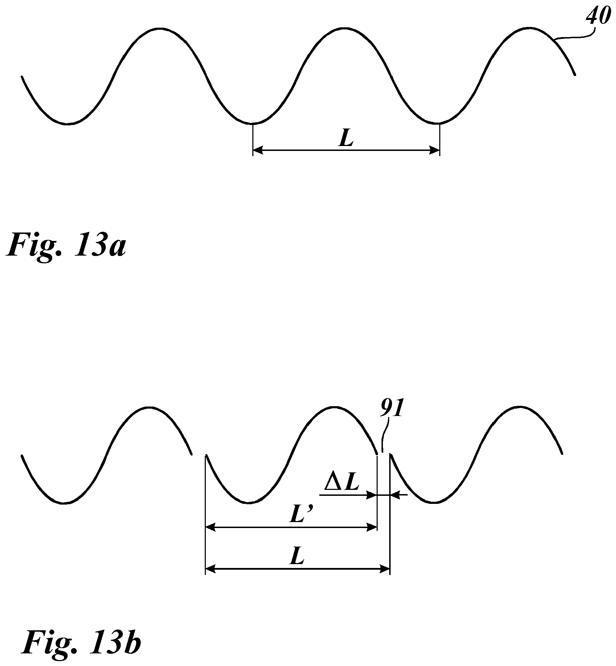

Anhand der Fig. 2b und 2d wird ersichtlich, dass die Leiterbahnen auch wellenförmig ausgebildet sein können. Eine einzelne solche Leiterbahn 40 ist in Fig. 13a dargestellt. Möchte man nun einen ausgesparten Bereich 91 vorsehen, so wird vorliegend nicht einfach etwas herausgeschnitten aus der Leiterbahn 40; sondern es wird die Leiterbahn über einen größeren Abschnitt hinweg, beispielsweise über eine Periode mit der Länge L hinweg, herausgeschnitten und der herausgeschnittene Abschnitt wird auf die Länge L' gestaucht. Der dadurch zur Verfügung stehende Platz ΔL sorgt für die galvanische Trennung.

Die Fig. 14a veranschaulicht nochmals die Anordnung von Leiterbahnen 40 gemäß Fig. 2a, nur dass zusätzlich Gitterpunkte 107 eingezeichnet sind, um zu erläutern, wie andere Anordnungen, etwa die Anordnung gemäß Fig. 2c, definiert werden können.

Die Gitterpunkte 107 bilden die Kreuzungspunkte der Leiterbahnen 40, wobei die verbindenden Leiterbahnen 40 dieser Gitterpunkte 107 typischerweise quadratische, rechteckförmige oder z. B. rautenförmige Einheitszellen 108 definieren. Wird diese mit regelmäßig angeordneten Leiterbahnen 40 ausgebildete berührungsempfindliche Schicht 31 einem Flüssigkristall-Display mit einer Anordnung von Bildpunkten in einem periodischen Gitter überlagert, so ergeben sich für einen Betrachter Moire-Effekte, die als störend empfunden werden und die Lesbarkeit des Flüssigkristall-Display durch die berührungsempfindliche Schicht 31 hindurch beeinträchtigen.

Dabei kann vorgesehen sein, dass die berührungsempfindliche Schicht 31 zweilagig mit zueinander beabstandet und galvanisch getrennten elektrisch leitfähigen Ebenen aus Leiterbahngittern aufgebaut ist. Dann können störende Moire-Effekte bereits innerhalb der berührungsempfindlichen Schicht durch die Überlagerung der Leiterbahngitter zustande kommen. Dies kann beispielsweise bei zweilagigen, resistiven oder kapazitiven Touch-Displays der Fall sein.

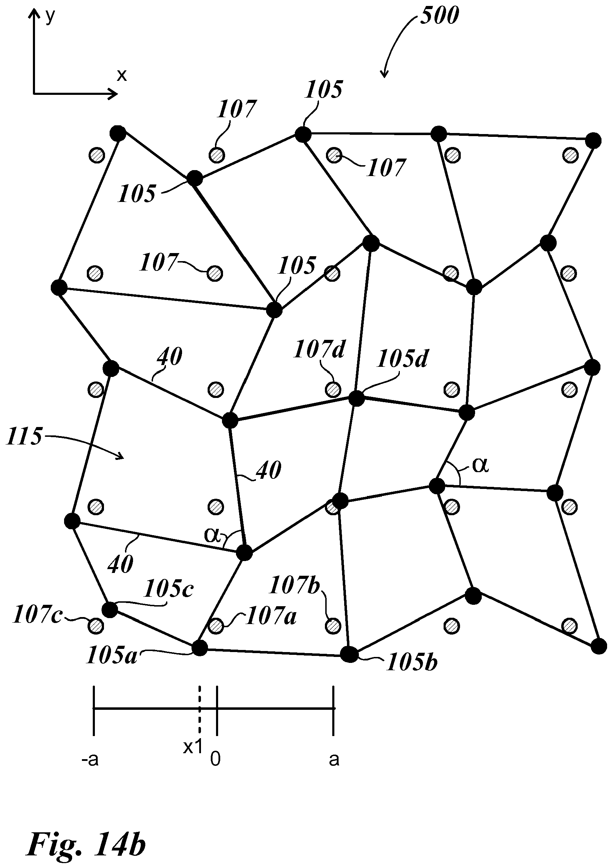

Fig. 14b zeigt ein beispielhaftes Gitter 500, bei dem zumindest ein Teil der Gitterpunkte 105 und/oder zumindest ein Teil der Kanten der Einheitszellen 115 des Gitters 500, also der Gitterzellen 115, statistisch, also zufällig innerhalb vorgegebener Grenzen, gesetzt und/oder in Länge und/oder Winkel zueinander variiert sind. Durch die versetzte Lage der Gitterpunkte werden aus den regelmäßig, also periodisch, angeordneten Gitterpunkten 107 die statistisch innerhalb vorgegebener Grenzen gesetzten Gitterpunkte 107a bis 107d. Die Länge der Kanten aus Leiterbahnen 40 variiert ebenso wie die Winkel a, die die Leiterbahnen 40 an Gitterpunkten 107 miteinander einschließen.

Beispielsweise ist im Gitter 500 der Fig. 14b vorgesehen, dass sich der Gitterpunkt 107a an der x-Position "0" befindet. Die benachbarten Gitterpunkte 107b und 107c befinden sich dann an den x-Positionen "a" und "-a", wobei a die Gitterkonstante des periodischen Gitters 5 aus Figur 3 ist. Gemäß der hier gezeigten Ausführungsform der Erfindung ist es vorgesehen, den Gitterpunkt 105a an die x-Position x1, welche von der x-Position 0 abweicht, zu setzen. Analog erfolgt eine Verschiebung des Gitterpunktes 105a entlang der y-Achse (hier nicht extra gezeigt). So wird ein Gitter gebildet, in dem die Gitterpunkte 107 mit einer bestimmten Häufigkeit entlang der x- und y-Achse um bestimmte Werte innerhalb der Grenzen -a und a verschoben gesetzt sind.

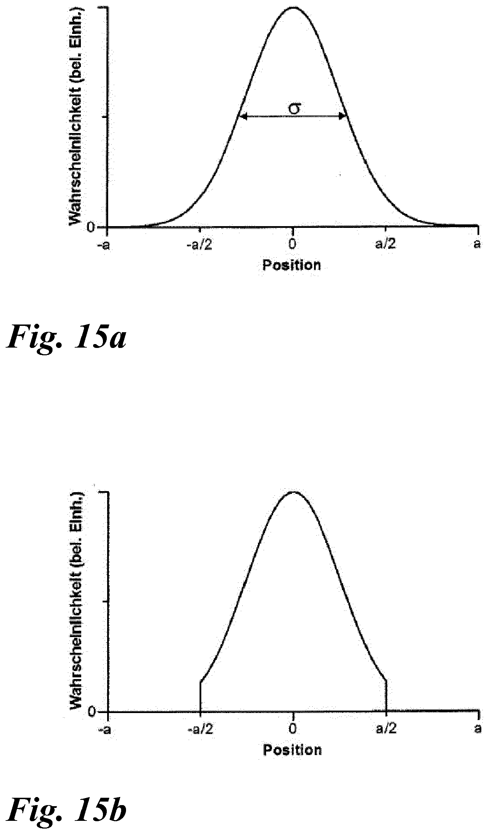

Die Häufigkeit, mit der die Verschiebung bestimmte Werte annimmt, kann dabei definiert werden, beispielsweise wie in Fig. 15a gezeigt, mit der Normalverteilung nach Gauß. Aufgetragen ist in Fig. 15a die Wahrscheinlichkeit, den Gitterpunkt 105a an einer jeweiligen spezifischen x-Position zu finden. Wird beispielsweise ein Histogramm für alle x-Positionen der Gitterpunkte 105 der berührungsempfindlichen Schicht 31 erzeugt, so würde sich dieses Histogramm dem Verlauf des Graphen der Fig. 15a annähern. Die Breite σ der Verteilung kann gewählt werden. Vorteilhafterweise wird die Breite σ so gewählt, dass die Wahrscheinlichkeit für die Verschiebung eines Gitterpunktes 107 über die Lage des benachbarten Gitterpunktes hinaus quasi Null ist.

Zu diesem Zweck kann die Normalverteilung der Fig. 15a insbesondere mit einer zusätzlichen Abschneidevorschrift kombiniert werden. So ist gemäß Fig. 15b vorgesehen, die Wahrscheinlichkeit für das Auffinden des ursprünglich an der Position "0" gelegenen Gitterpunktes 105a an einer Position außerhalb des Intervalls [-a/2; a/2] auf Null zu setzen. Dabei ergibt sich, dass beispielsweise der Gitterpunkt 105a sich nicht näher am Gitterpunkt 107b befindet, als der zu diesem Gitterpunkt gehörige Gitterpunkt 105b. So sind weiterhin viereckige, obwohl nicht rechteckige Gitterzellen 115 vorgegeben.

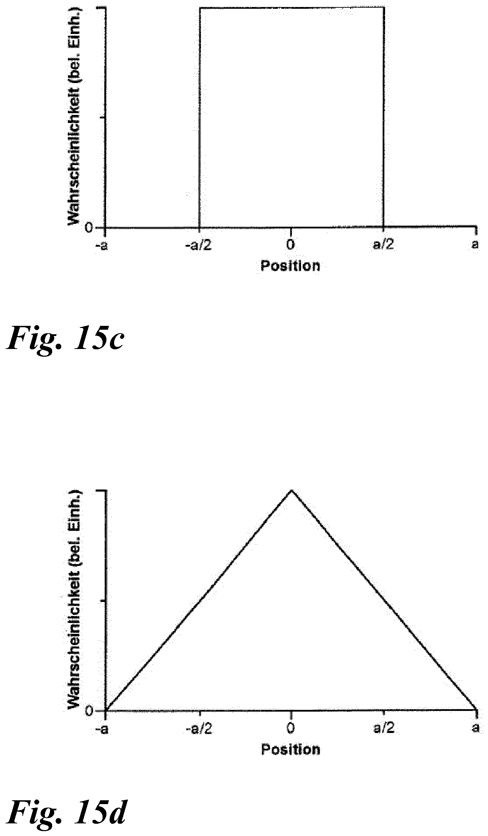

Anstelle der Normalverteilung, wie in Fig. 15a und 15b gezeigt, können auch beliebige andere Verteilungen vorgesehen sein, beispielsweise die Gleichverteilung gemäß Fig. 15c oder die Dreiecksverteilung gemäß Fig. 15d.

Die Verteilungen sind für eine Raumdimension (x- oder y-Richtung) dargestellt. Es sind aber insbesondere auch die zugehörigen zweidimensionalen Erweiterungen vorgesehen. Die Verteilungen können auch beliebig miteinander kombiniert werden und/oder sich in den beiden Raumdimensionen voneinander unterscheiden.

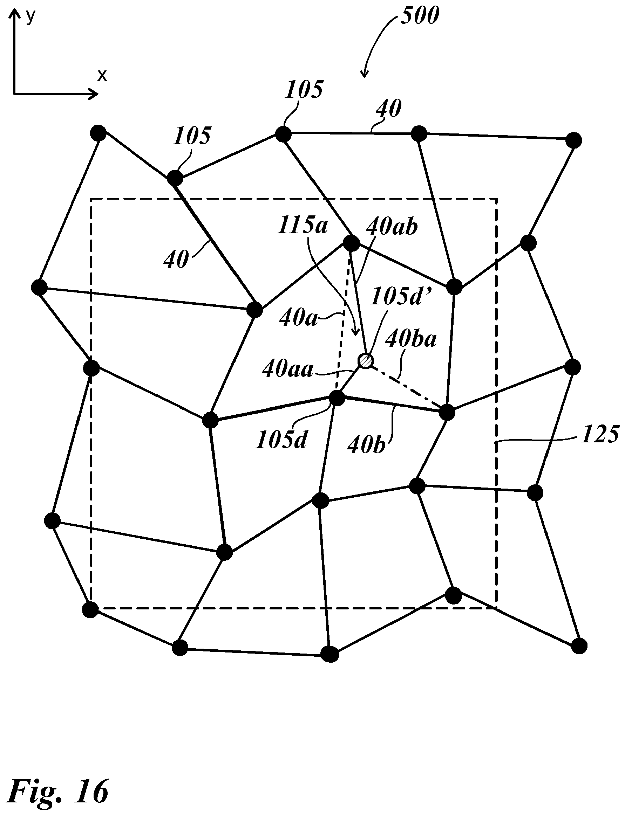

Wie in Fig. 16 gezeigt, kann zur Homogenisierung der Flächenbelegung die Wahl und/oder Anpassung der Verteilung so erfolgen, dass innerhalb eines vorgegebenen Flächenbereichs 125, der beispielsweise einem Tastfeld oder einem Empfangs- oder Sendefeld entspricht, die Flächenbelegungsdichte mit Leiterbahnen 40 einem vorgegebenen mittleren Wert entspricht oder sich dieser Wert nur innerhalb einer bestimmten Breite verschiebt. Besonders bevorzugt ist es, wenn diese Flächenbelegung für jeden beliebig auf dem Gitter 105 positionierbaren, gleichgroßen Flächenbereich 125 nur um einen vorgegebenen prozentualen Wert schwankt. Man erhält dann bei einem genügend groß gewählten Flächenbereich 125 eine quasi konstante Flächenbelegung mit Leiterbahnen 40, so dass trotz des nichtperiodischen Gitters eine quasi homogene Flächenleitfähigkeit gewährleistet ist.

Beispielsweise kann vorgesehen sein, dass der Flächenbereich 125 eine Fläche von 5a*5a = 25 a² hat. Ferner kann vorgegeben werden, dass unabhängig von der jeweiligen Position dieses Flächenbereichs 125 auf der mit Gitter 105 belegten Fläche, der Anteil der mit Leiterbahnen 40 belegten Fläche an der Gesamtfläche ( = 25 a²) des Flächenbereichs 125 um nie mehr als 5% vom Mittelwert (dieses Anteils für alle möglichen Positionen des Flächenbereichs 125) abweicht.

Wie in Fig. 16 gezeigt, ist es auch im Sinne des weiteren Aspekts, beispielsweise zusätzliche Gitterpunkte 105 einzuführen. Im Beispiel gemäß Fig. 16 ergibt sich innerhalb des Flächenbereichs 125 ohne zusätzliche Gitterpunkte 105 eine zu geringe Leiterbahndichte. Die Leiterbahndichte wird dadurch erhöht, dass beispielsweise zusätzlich zu dem Gitterpunkt 105d der Gitterpunkt 105d' eingefügt wird. Alternativ oder ergänzend kann die Leiterbahn 40a durch die Leiterbahnen 40aa und 40ab ersetzt werden. Wiederum alternativ oder ergänzend können statt der Leiterbahn 40b die Leiterbahnen 40aa und 40ba ausgebildet werden, wodurch die Leiterbahndichte wiederum erhöht wird. Alternativ kann auch vorgesehen sein, beispielsweise die Leiterbahnen 40aa und 40ab zusätzlich zur Leiterbahn 40a auszubilden, so dass sich eine zusätzliche dreiecksförmige Zelle 11a ergibt.

So ist in Fig. 16 gezeigt, wie die Flächenbelegungsdichte eingestellt werden kann. Das Konstruktionsprinzip kann auch als Verdoppelung des ursprünglichen Gitterpunktes 107d aus Fig. 4 in die beiden Gitterpunkte 105d und 105d' verstanden werden. Dabei können diese beiden Gitterpunkte 105d und 105d' den jeweils vorgegebenen Verteilungen entsprechen, sie können aber auch unabhängig voneinander einer Verteilung entsprechen. Ungünstig und unerwünscht ist dabei, dass die beiden Gitterpunkte 105d und 105d' auf der gleichen Stelle liegen. Beliebige weitere Gitterpunkte 105 und/oder Leiterbahnenstücke 106 können eingefügt werden.

Die Leiterbahnen 106 sind beispielsweise geradlinig ausgebildet, wie in Figur 16 gezeigt. Sie können jedoch auch gekrümmt und insbesondere sinusförmig ausgebildet sein, wie es oben anhand von Fig. 13a und 13b dargestellt wurde.

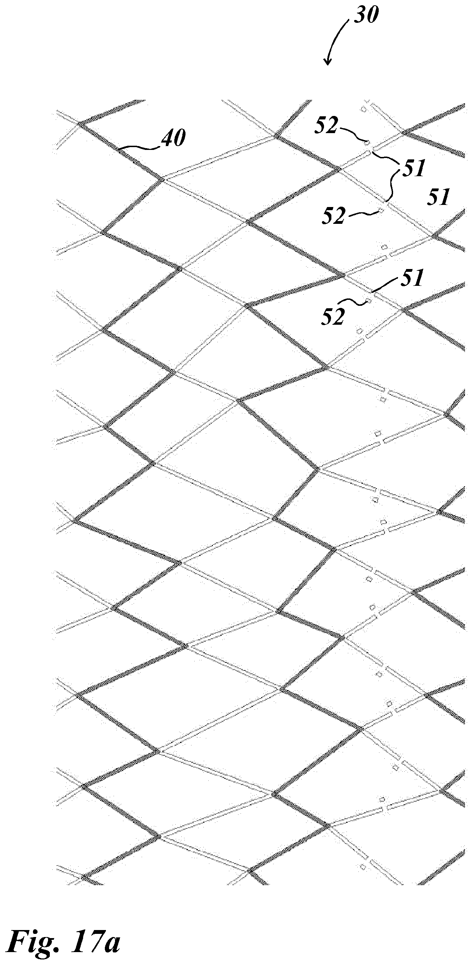

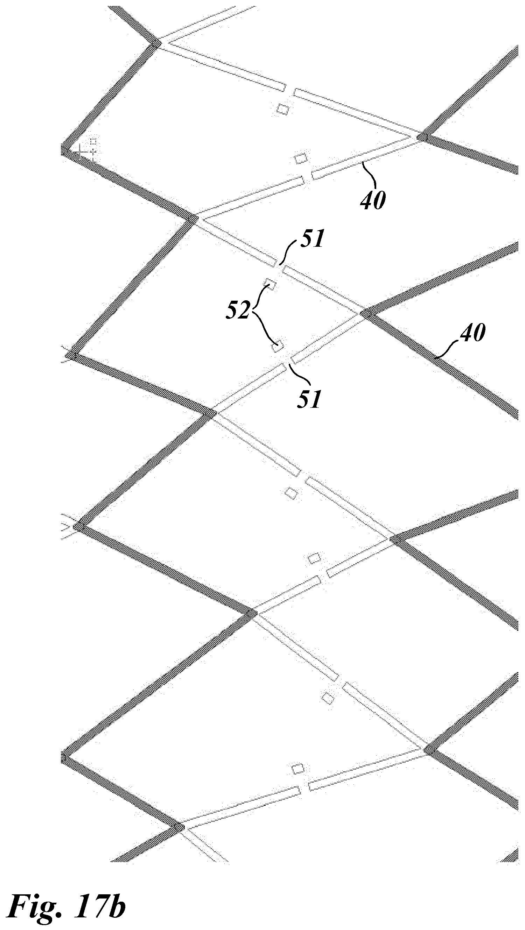

Die Fig.17a zeigt eine Anordnung aus elektrisch leitfähigen Leiterbahnen 40 in einem Muster, dessen Entstehung oben anhand der Fig. 14b erläutert wurde. Zusätzlich sind, wie oben auch schon anhand der Fig. 4 erläutert wurde, in einem in Fig. 17b vergrößert gezeigten Übergangsbereich 30 Aussparungen 51 vorgesehen, die durch Ersatzstücke 52 ersetzt werden.

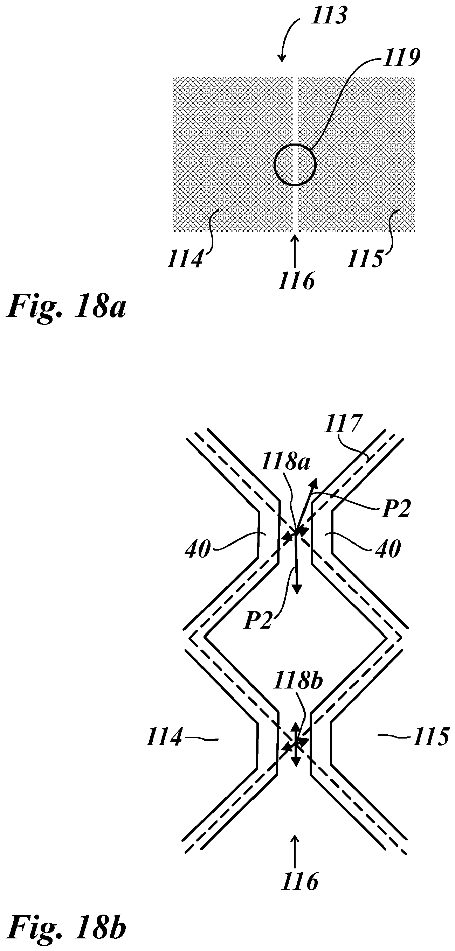

Fig. 18a und 18b zeigen die Ausführungsform der Erfindung, bei der das Gitter 500 aus transparenten Spalten 116 zwischen Tastfeldern 113 oder Tastfelderteilen wie Empfangsfeld 114 und Sendefeld 115 gebildet ist.

Auch ein Gitter 500 aus transparenten Spalten 116 kann bei Überlagerung, insbesondere bei einem in Abweichung von Fig. 1b vorgesehenen zweilagigen Aufbau der berührungsempfindlichen Schicht Überstrukturen bilden, die einen Moire-Beugungseffekt oder andere störende optische Effekte bewirken. Nach einer Ausführungsform der Erfindung ist daher vorgesehen, den virtuellen Gitterpunkt 118 des transparenten Spaltes, in Fig. 18b durch Hilfslinien 117 veranschaulicht, genau wie die Gitterpunkte 107 zu anderen Gitterpunktlagen 105 zu verschieben. Die dabei vorgesehene Verschiebung ist hier durch die Pfeile P2 verdeutlicht. So ist nach der Erfindung beispielsweise vorgesehen, die Geradlinigkeit des Spaltes 116 aufzubrechen.

Die Fig. 18b zeigt den Ausschnitt 119 aus Fig. 18a. Wie mittels der Hilfslinien 117 gezeigt, ergibt sich ein virtueller Gitterpunkt innerhalb des Spaltes 116, der um seine O-Position ebenso wie die anderen Gitterpunkte 107 in Fig. 14 und 16 manipuliert werden kann. Praktisch vorgesehen ist dabei eine Verschiebung der Leiterbahnen 40, in deren Verlängerung, wie durch die Hilfslinien 117 gezeigt, sich die virtuellen Gitterpunkte 118a und 118b bilden.

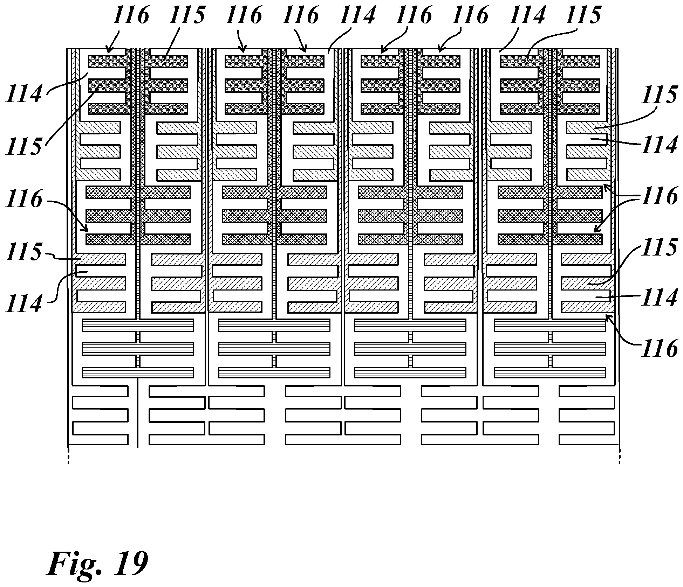

Fig. 19 zeigt eine Tastfeldeinrichtung in der Draufsicht. Zu erkennen sind elektrisch leitende Flächenbereiche 114 und 115, die ein Tastfeld aufbauen. Die Flächenbereiche 114 und 115 sind durch einen galvanischen Spalt 116, der wegen der Transparenz des Substrates auch transparent ist, voneinander beabstandet angeordnet. Die Flächenbereiche 114 und 115 stellen die "gefüllten" Gittermaschen eines Gitters, dessen Gitterlinien der transparente Spalt 116 bildet, dar. Betrachtet man einen Flächenbereich 114 oder 115 im Detail, so ergeben sich Gitter aus nicht-transparenten Leiterbahnen wie in Fig. 18a und noch mehr vergrößert in Fig. 18b gezeigt. Führt man die durch die Belegung mit nicht-transparenten Leiterbahnen vorgezeigten Linien, wie in Fig. 18b gezeigt, fort, so ergeben sich virtuelle, transparente Gitterpunkte 118, deren Lage im regelmäßig periodischen Aufbau gleichmäßig periodisch angeordnet ist, aber gemäß der Erfindung eben verschoben ist, wie in Fig. 18b durch die Pfeile P2 gezeigt.

## Patentansprüche

1. Mehrschichtkörper (1) mit einer Trägerschicht (300) und auf der Trägerschicht (300) zumindest einer Leitungsschicht (31) mit elektrisch leitfähigen Leiterbahnen (40), wobei der Mehrschichtkörper (1) einen ersten Bereich (10, 41) und einen zweiten Bereich (20, 42) aufweist, wobei sowohl in dem ersten Bereich (10, 41) als auch in dem zweiten Bereich (20, 42)jeweils Leiterbahnen (40) dadurch galvanisch miteinander gekoppelt sind, dass sie in einer Anordnung bereitgestellt sind, in welcher die Leiterbahnen (40) jeweils eine oder mehrere andere Leiterbahnen (40) berühren, und wobei die beiden Bereiche durch einen dritten Bereich (30) voneinander galvanisch getrennt sind, und wobei in dem dritten Bereich (30) die Leiterbahnen (40) fortgeführt sind, **dadurch gekennzeichnet, dass** aus den Leiterbahnen (40) derart Abschnitte (51, 71, 81, 91) ausgespart sind, dass Trennungsstellen gebildet sind, und dass die ausgesparten Abschnitte (51, 71, 81, 91) durch an oder neben den Trennungsstellen angeordnete, insbesondere leitfähige Ersatzstücke (52; 52a, 52b; 521, 522; 405, 407, 408, 409; 54; 54') ersetzt sind, welche so angeordnet sind, dass eine durch das Aussparen bewirkte galvanische Trennung des ersten und des zweiten Bereichs (10, 20; 41, 42) aufrecht erhalten bleibt, und dass die Ersatzstücke (52; 52a, 52b; 521, 522; 405, 407, 408, 409; 54; 54') so nahe an den Trennungsstellen angeordnet sind, dass eine mittlere Belegung der Trägerschicht (30) mit elektrisch leitfähigem Material, die jeweils zu Flächeneinheiten (B, B') mit einer Abmessung von zwischen 20 und 80 µm in einer Erstreckungsrichtung ermittelt wird, über die ersten, dritten und zweiten Bereiche hinweg nicht mehr als um 15 %, bevorzugt nicht mehr als um 10 % schwankt, besonders bevorzugt nicht mehr als um 5 % schwankt.

2. Mehrschichtkörper nach Anspruch 1,
bei dem die Leiterbahnen (40) eine insbesondere gleichmäßige Breite von zwischen 1 µm und 300 µm, bevorzugt von zwischen 5 µm und 50 µm aufweisen und die Ersatzstücke (52; 52a, 52b; 521, 522; 405, 407, 408, 409; 54; 54') um höchstens das Dreifache, besonders um höchstens das Zweifache dieser Breite von den Leiterbahnen beabstandet sind, und/oder die Aussparungen (71, 81) an Kreuzungspunkten der Leiterbahnen (40) bereitgestellt sind und die Ersatzstücke (405; 407; 408; 409) an jeweils zumindest einem Leiterbahnpaar (406) angesetzt sind.

3. Mehrschichtkörper nach einem der vorhergehenden Ansprüche,
**dadurch gekennzeichnet, dass**
die Aussparungen zwischen Kreuzungspunkten (601, 602; 603, 604, 605) der Leiterbahnen (40) bereitgestellt sind.

4. Mehrschichtkörper nach Anspruch 3,
**dadurch gekennzeichnet, dass**
die Ersatzstücke (521, 522) voneinander weg, bevorzugt um denselben Winkel voneinander weg, verkippte Leiterbahnteile (521, 522) sind.

5. Mehrschichtkörper nach Anspruch 4,
**dadurch gekennzeichnet, dass**
die Leiterbahnteile (521, 522) jeweils gegenüber Kreuzungspunkten (601, 602) verkippt sind oder dass
die verkippten Leiterbahnteile (521, 522) jeweils gegenüber von den Kreuzungspunkten wegstehenden anderen Leiterbahnteilen (401, 402) verkippt sind und vorzugsweise in demselben Winkel verkippt sind, wie Leiterbahnen oder Leiterbahnteile von dem Kreuzungspunkt wegstehen.

6. Mehrschichtkörper nach Anspruch 3,
**dadurch gekennzeichnet, dass**
die Ersatzstücke (52) neben Leiterbahnteile (40) gesetzt sind oder dass die Ersatzstücke (52a, 52b) an die Leiterbahnteile (40) angesetzt sind, insbesondere unter Bildung einer T-Form oder einer Pfeilform oder einer Stulpenform.

7. Mehrschichtkörper nach einem der Ansprüche 3 bis 6,
bei dem zumindest zwei Aussparungen (513, 514) in benachbarten Leiterbahnen (403, 404) zwischen jeweils einem Paar von Kreuzungspunkten (603, 604; 603, 605) jeweils unterschiedlich von zwei zueinander benachbarten Kreuzungspunkten (604, 605) beabstandet sind.

8. Mehrschichtkörper nach einem der vorhergehenden Ansprüche,
**dadurch gekennzeichnet, dass**
die Anordnung der Leiterbahnen (40) ein regelmäßiges Muster aufweist.

9. Mehrschichtkörper nach einem der vorhergehenden Ansprüche,
**dadurch gekennzeichnet, dass**
die Anordnung der Leiterbahnen (40) durch eine stochastische Variation eines zu einem regelmäßigen Muster definierten Parameters aus einem regelmäßigen Muster hervorgeht.

10. Mehrschichtkörper nach Anspruch 9, wobei das Muster als ein Gitter aus nicht-transparenten Leiterbahnen (40) und/oder aus transparenten Spalten zwischen, mit Belegung durch Leiterbahnen gefüllten, Gitterzellen die Belegung der Trägerschicht (300) bildet und zumindest ein Teil der das Gitter bildenden Gitterpunkte und/oder zumindest ein Teil der Kanten der Gitterzellen zufällig oder pseudo-zufällig innerhalb vorgegebener Grenzen, gesetzt und/oder in Länge und/oder Winkel zueinander variiert sind.

11. Mehrschichtkörper nach einem der vorhergehenden Ansprüche, wobei innerhalb eines vorgebbaren Flächenbereichs die mittlere Belegungsdichte im Gitter mit nichttransparenten Bahnen und/oder Gitterpunkten (105) homogen ist, wobei insbesondere
die Homogenität der Belegungsdichte des vorgebbaren Flächenbereichs ganz oder teilweise durch zusätzliche Gitterpunkte (107d') erreicht wird.

12. Mehrschichtkörper nach einem der vorhergehenden Ansprüche, wobei die Verteilung der Gitterpunkte (105) innerhalb der gesetzten Grenze einer Normalverteilung, einer Gleichverteilung oder einer Dreiecksverteilung entspricht.

13. Mehrschichtkörper nach einem der Ansprüche 8 bis 12,
**dadurch gekennzeichnet, dass**
das Muster ein Gittermuster mit viereckigen, insbesondere quadratischen oder rautenförmigen Zellen, oder mit dreieckigen Zellen oder sechseckigen Zellen ist oder das Muster regelmäßige ungeradlinige oder gekrümmte Teilmuster aufweist, in denen die Abschnitte ausgespart sind, und dass die Ersatzstücke durch Stauchung der regelmäßigen ungeradlinigen bzw. gekrümmten Teilmuster bereitgestellt sind, wobei das Teilmuster insbesondere wellenförmig, insbesondere sinusförmig ist.

14. Mehrschichtkörper nach einem der vorhergehenden Ansprüche,
der als erste und zweite Bereiche eine Mehrzahl von Sendebereichen (41) und Empfangsbereichen (42) zur Bereitstellung einer Tastfeldfunktionalität aufweist.

15. Verwendung eines Mehrschichtkörpers nach einem der Ansprüche 1 bis 14 als Tastfeldeinrichtung, als Teil einer solchen oder als Heizelement.

## Claims

1. Multilayer body (1) having a carrier layer (300) and, on the carrier layer (300), at least one conductive layer (31) having electrically conductive conductor paths (40), wherein the multilayer body (1) has a first region (10, 41) and a second region (20, 42), wherein both in the first region (10, 41) and in the second region (20, 42) respectively, conductor paths (40) are galvanically coupled to one another in such a way that they are provided in an arrangement in which the conductor paths (40) each touch one or more other conductor paths (40), and wherein the two regions are galvanically separated from each other by a third region (30), and wherein the conductor paths (40) are continued in the third region (30), **characterised in that** portions (51, 71, 81, 91) are removed from the conductor paths (40) in such a way that separation points are formed, and the removed portions (51, 71, 81, 91) are replaced by replacement pieces (52; 52a, 52b; 521, 522; 405, 407, 408, 409; 54; 54') which are arranged on or near the separation points and are in particular conductive, and are arranged such that a galvanic separation of the first and second region (10, 20; 41, 42), which is caused by the removal, is maintained and the replacement pieces (52; 52a, 52b; 521, 522; 405, 407, 408, 409; 54; 54') are arranged so close to the separation points that an average coating of the carrier layer (30) with electrically conductive material, which is determined in an extension direction in each case with respect to area units (B, B') having a dimension of between 20 and 80µm, varies across the first, third and second regions by no more than 15%, preferably no more than 10%, particularly preferably no more than 5%.

2. Multilayer body according to claim 1,
in which the conductor paths (40) have an in particular uniform width of between 1µm and 300µm, preferably of between 5µm and 50µm, and the replacement pieces (52; 52a, 52b; 521, 522; 405, 407, 408, 409; 54; 54') are spaced apart from the conductor paths by at most three times, especially by at most two times this width, and/or the openings (71, 81) are provided on points of intersection of the conductor paths (40) and the replacement pieces (405; 407; 408; 409) are each attached to at least one pair of conductor paths (406).

3. Multilayer body according to one of the preceding claims,
**characterised in that**
the openings are provided between points of intersection (601, 602; 603, 604, 605) of the conductor paths (40).

4. Multilayer body according to claim 3,
**characterised in that**
the replacement pieces (521, 522) are conductor path parts (521, 522) which are tilted away from one another, preferably tilted away from one another at the same angle.

5. Multilayer body according to claim 4,
**characterised in that**
the conductor path parts (521, 522) are each tilted with respect to points of intersection (601, 602) or
the tilted conductor path parts (521, 522) are each tilted with respect to other conductor path parts (401, 402) protruding from the points of intersection and are preferably tilted at the same angle as conductor paths or conductor path parts protrude from the point of intersection.

6. Multilayer body according to claim 3,
**characterised in that**
the replacement pieces (52) are placed near conductor path parts (40) or the replacement pieces (52a, 52b) are attached to the conductor path parts (40), in particular to form a T-shape or an arrow shape or a cuff shape.

7. Multilayer body according to one of claims 3 to 6,
in which at least two openings (513, 514) in adjacent conductor paths (403, 404), each between a pair of points of intersection (603, 604; 603, 605), are each spaced apart differently from two points of intersection (604, 605) which are adjacent to each other.

8. Multilayer body according to one of the preceding claims,
**characterised in that**
the arrangement of conductor paths (40) has a regular pattern.

9. Multilayer body according to one of the preceding claims,
**characterised in that**
the arrangement of conductor paths (40) emerges from a regular pattern by a stochastic variation of a parameter which is defined relative to a regular pattern.

10. Multilayer body according to claim 9, wherein the pattern forms the coating of the carrier layer (300) as a grid made from non-transparent conductor paths (40) and/or made from transparent gaps between grid points which are filled with coating by conductor paths and at least a portion of the grid points forming the grid and/or at least a portion of the edges of the grid cells are randomly or pseudo-randomly placed within predetermined borders, and/or are varied in length and/or angle with respect to one another.

11. Multilayer body according to one of the preceding claims, wherein the average coating density in the grid within a predeterminable surface area is homogeneous with non-transparent paths and/or grid points (105), wherein in particular
the homogeneity of the coating density of the predeterminable surface area is fully or partially achieved by additional grid points (107d').

12. Multilayer body according to one of the preceding claims, wherein the distribution of the grid points (105) within the set border corresponds to a normal distribution, a uniform distribution or a triangular distribution.

13. Multilayer body according to one of claims 8 to 12,
**characterised in that**
the pattern is a grid pattern having quadrangular, in particular square or diamond-shaped cells, or having triangular cells or hexagonal cells, or the pattern has regular non-rectilinear or curved partial patterns in which the portions are removed, and the replacement pieces are provided by compressing the regular non-rectilinear or curved partial patterns, wherein the partial pattern is in particular undulating, in particular sinusoidal.

14. Multilayer body according to one of the preceding claims, which has a plurality of transmission regions (41) and reception regions (42) as first and second regions for providing a touchpad function.

15. Use of a multilayer body according to one of claims 1 to 14 as a touchpad device, as part of such a touchpad device or as a heating element.

## Revendications

1. Corps multicouche (1) avec une couche de support (300) et, sur la couche de support (300), au moins une couche conductrice (31) avec des pistes conductrices (40) électriquement conductrices, dans lequel le corps multicouche (1) présente une première zone (10, 41) et une seconde zone (20, 42), dans lequel respectivement des pistes conductrices (40) sont couplées de manière galvanique les unes aux autres à la fois dans la première zone (10, 41) et dans la seconde zone (20, 42) par le fait qu'elles sont fournies selon un agencement, dans lequel les pistes conductrices (40) sont en contact respectivement avec une ou plusieurs autres pistes conductrices (40), et dans lequel les deux zones sont séparées de manière galvanique l'une de l'autre par une troisième zone (30), et dans lequel les pistes conductrices (40) se poursuivent dans la troisième zone (30), **caractérisé en ce que** des sections (51, 71, 81, 91) sont évidées à partir des pistes conductrices (40) de telle manière que des emplacements de séparation sont formés, et que les sections (51, 71, 81, 91) évidées sont remplacées par des pièces de remplacement (52 ; 52a, 52b ; 521, 522 ; 405, 407, 408, 409 ; 54 ; 54'), en particulier conductrices, disposées au niveau des emplacements de séparation ou à côté de ces derniers, lesquelles sont disposées de telle sorte qu'une séparation galvanique, provoquée par l'action d'évider, de la première et de la seconde zone (10, 20 ; 41, 42) reste conservée, et que les pièces de remplacement (52 ; 52a, 52b ; 521, 522 ; 405, 407, 408, 409 ; 54, 54') sont disposées de manière si proche des emplacements de séparation qu'un taux d'occupation moyen de la couche de support (30) avec un matériau électriquement conducteur, lequel est déterminé respectivement par rapport à des unités de surface (B, B') avec une dimension comprise entre 20 et 80 µm dans une direction d'extension, ne fluctue pas plus de 15 %, de manière préférée pas plus de 10 %, de manière particulièrement préférée pas plus de 5 % au-delà des premières, troisièmes et deuxièmes zones.

2. Corps multicouche selon la revendication 1,
où les pistes conductrices (40) présentent une largeur en particulier constante comprise entre 1 µm et 300 µm, de manière préférée comprise entre 5 µm et 50 µm, et les pièces de remplacement (52 ; 52a, 52b ; 521, 522 ; 405, 407, 408, 409 ; 54 ; 54') sont espacées des pistes conductrices au maximum de trois fois, en particulier au maximum de deux fois ladite largeur, et/ou les évidements (71, 81) sont fournis au niveau de points d'intersection des pistes conductrices (40), et les pièces de remplacement (405 ; 407 ; 408 ; 409) sont placées au niveau de respectivement au moins une paire de pistes de conductrices (406).

3. Corps multicouche selon l'une quelconque des revendications précédentes,
**caractérisé en ce que**
les évidements sont fournis entre des points d'intersection (601, 602 ; 603, 604, 605) des pistes conductrices (40).

4. Corps multicouche selon la revendication 3,
**caractérisé en ce que**
les pièces de remplacement (521, 522) sont des parties de pistes conductrices (521, 522) éloignées par basculement les unes des autres, éloignées de manière préférée les unes des autres selon le même angle.

5. Corps multicouche selon la revendication 4,
**caractérisé en ce que**
les parties de pistes conductrices (521, 522) sont basculées respectivement par rapport à des points d'intersection (601, 602), ou que
les parties de pistes conductrices (521, 522) basculées sont basculées respectivement par rapport à d'autres parties de pistes conductrices (401, 402) dépassant des points d'intersection et sont basculées de préférence selon le même angle selon lequel des pistes conductrices ou des parties de pistes conductrices dépassent du point d'intersection.

6. Corps multicouche selon la revendication 3,
**caractérisé en ce que**
les pièces de remplacement (52) sont placées à côté des parties de pistes conductrices (40), ou que les pièces de remplacement (52a, 52b) sont placées au niveau des parties de pistes conductrices (40), en particulier en formant une forme en T ou une forme de flèche ou une forme de manchon.

7. Corps multicouche selon l'une quelconque des revendications 3 à 6,
où au moins deux évidements (513, 514) dans des pistes conductrices (403, 404) adjacentes sont espacés entre respectivement une paire de points d'intersection (603, 604 ; 603, 605) respectivement différemment de deux points d'intersection (604, 605) adjacents l'un par rapport à l'autre.

8. Corps multicouche selon l'une quelconque des revendications précédentes,
**caractérisé en ce que**
l'agencement des pistes conductrices (40) présente un motif régulier.

9. Corps multicouche selon l'une quelconque des revendications précédentes,
**caractérisé en ce que**
l'agencement des pistes conductrices (40) résulte d'un motif régulier par une variation stochastique d'un paramètre défini par rapport à un motif régulier.

10. Corps multicouche selon la revendication 9, dans lequel le motif forme en tant qu'une grille à partir de pistes conductrices (40) non transparentes et/ou à partir de colonnes transparentes entre des cellules de grille remplies du fait de l'occupation par des pistes conductrices, l'occupation de la couche de support (300), et au moins une partie des points de grille formant la grille et/ou au moins une partie des arêtes des cellules de grille sont placées de manière aléatoire ou de manière pseudo-aléatoire à l'intérieur de limites prédéfinies et/ou varient en longueur et/ou en angle les uns par rapport aux autres.

11. Corps multicouche selon l'une quelconque des revendications précédentes, dans lequel la densité d'occupation moyenne dans la grille par des pistes non transparentes et/ou des points de grille (105) est homogène à l'intérieur d'une zone de surface pouvant être prédéfinie, dans lequel en particulier
l'homogénéité de la densité d'occupation de la zone de surface pouvant être prédéfinie est atteinte en totalité ou en partie par des points de grille (107d') supplémentaires.

12. Corps multicouche selon l'une quelconque des revendications précédentes, dans lequel la répartition des points de grille (105) correspond, à l'intérieur de la limite posée, à une répartition normale, à une répartition égale ou à une répartition triangulaire.

13. Corps multicouche selon l'une quelconque des revendications 8 à 12,
**caractérisé en ce que**
le motif présente un motif de grille avec des cellules rectangulaires, en particulier carrées ou en forme de losange ou avec des cellules triangulaires ou de cellules hexagonales, ou le motif présente des motifs partiels réguliers non rectilignes ou incurvés, dans lesquels les sections sont évidées, et que les pièces de remplacement sont fournies par l'écrasement des motifs partiels réguliers non rectilignes ou incurvés, dans lequel le motif partiel présente en particulier une forme ondulée, en particulier une forme sinusoïdale.

14. Corps multicouche selon l'une quelconque des revendications précédentes,
qui présente en tant que premières et secondes zones une multitude de zones émettrices (41) et de zones réceptrices (42) servant à fournir une fonctionnalité de pavé tactile.

15. Utilisation d'un corps multicouche selon l'une quelconque des revendications 1 à 14, en tant que
système de pavé tactile ou en tant que partie d'un système de pavé tactile de ce type ou
en tant qu'élément de chauffage.
